# DEMANDE DE BREVET EUROPEEN

(11) **EP 1 103 935 A2**
(43) Date de publication de la demande: **30.05.2001**
(21) Numéro de dépôt: 00128735.8
(22) Date de dépôt: 03.11.1998
(51) Int. Cl.: G07F 19/00, H04Q 7/38, G07F 7/10

(54) **Procédé de transmission d'information et serveur le mettant en oeuvre**

(30) Priorité: 04.11.1997 FR 9713825
(62) Demande divisionnaire de: 98954505.8
(71) Demandeur: Magicaxess, 92800 Puteaux (FR)
(72) Inventeur: Kremer, Gilles, 92170 Vanves (FR); Chanudet, Patrick, 92600 Asnieres (FR)
(74) Mandataire: Benech, Frédéric

(57) **Abrégé**

La présente invention propose l'utilisation combinée d'au moins deux réseaux de communication et plus précisément l'échange d'information confidentielle à un usager d'un premier support d'information à l'aide d'un deuxième support d'information par l'intermédiaire d'un mécanisme de synchronisation des supports d'information et de renvoi d'information d'un support à l'autre. Le procédé de transmission d'information sur un premier support comporte ainsi : une opération d'ouverture d'une session de communication avec un moyen de communication situé à distance, sur ledit premier support de communication, et, durant ladite session : une opération de réception d'une information confidentielle sur un terminal à adresse unique sur un deuxième support de communication, et une opération de transmission, sur le premier support de communication, d'un message confidentiel représentant l'information confidentielle, une opération pour vérifier si le message confidentiel correspond à l'information confidentielle.

## Description

La présente invention concerne un procédé de transmission d'information et un serveur informatique le mettant en oeuvre. Elle permet de s'assurer que la personne opérant depuis un terminal est une personne autorisée ou habilitée. Elle s'applique, en particulier, à la vérification d'identité de la personne qui accède à un service distant, quel que soit le terminal utilisé. Elle permet d'authentifier l'identité de l'utilisateur, d'authentifier une transaction, de vérifier l'intégrité de cette transaction en la complétant du montant de ladite transaction, de la quantité achetée, du nom du produit ou du service acquis, et ainsi de permettre le paiement de biens ou de services, en ligne, c'est-à-dire au cours d'une communication entre systèmes informatiques distants.

Des domaines d'application de l'invention sont, par exemple, le contrôle d'accès, la remise en main propre d'information confidentielle, la certification de transactions ou de paiement de biens ou services sur un réseau informatique.

La mise en oeuvre de la transaction à distance sur réseau pose, indépendamment de l'encryptage, le problème de l'authentification de la personne qui la réalise, de l'intégrité de la transaction et de sa confidentialité. Dans de nombreuses applications (commerce électronique, banque à distance, télé travail, sécurité interne des entreprises, sécurisation de bases de données payantes, par exemple) et sur tous supports (réseaux informatiques locaux ou distants, par exemple, respectivement, les réseaux communément appelés «intranet» ou «intemet», serveurs vocaux, par exemple), ce problème est crucial.

Les dispositifs et procédés de sécurisation connus dans l'art antérieur comme ceux illustrés dans le document US-A-5.442.704, qui utilisent une carte à mémoire, imposent des contraintes matérielles importantes et coûteuses.

D'autres dispositifs logiciels, basés sur des systèmes d'encryptage assurent la confidentialité des données sans garantir l'authentification de la personne.

D'autres dispositifs utilisent un moyen d'authentification, connu sous le nom «d'authentifieur» ou de «token», qui calcule à partir de données reçues au cours d'une transaction et d'une clé secrète qu'il conserve en mémoire, un mot de passe dynamique. Ces dispositifs imposent, de nouveau, des contraintes matérielles importantes et coûteuses.

La présente invention entend remédier à ces inconvénients. A cet effet, la présente invention propose l'utilisation combinée d'au moins deux réseaux de communication.

En d'autres termes, la présente invention propose la transmission, à un usager d'un premier support de communication, d'une information confidentielle, sur un deuxième support d'information, préférentiellement sécurisé, avec :
- un mécanisme de synchronisation des deux communications sur les deux réseaux et
- une opération de renvoi, d'un support de communication à l'autre, à l'initiative de l'usager, par saisie préférentiellement manuelle, de l'information confidentielle reçue sur l'autre support.

A cet effet, la présente invention vise, selon un premier aspect, un procédé de transmission d'information sur un premier support de transmission,
caractérisé en ce qu'il comporte :
- une opération d'ouverture d'une session de communication avec un moyen de communication situé à distance, sur ledit premier support de transmission,
   et, durant ladite session :
   . une opération de réception d'une information confidentielle sur un terminal à adresse unique sur un deuxième support de transmission, et
   . une opération de transmission, sur le premier support de transmission, d'un message confidentiel représentatif de ladite information confidentielle.

La présente invention vise, selon un deuxième aspect, un procédé de transmission d'information sur un premier support de transmission, caractérisé en ce qu'il comporte :
- une opération d'ouverture, par l'intermédiaire d'un terminal à adresse unique sur ledit premier support de transmission, d'une session de communication avec un moyen de communication situé à distance,
   et, durant ladite session :
   . une opération de réception d'une information confidentielle sur le premier support de transmission, et
   . une opération de transmission, sur un deuxième support de transmission, d'un message confidentiel représentatif de ladite information confidentielle.

La présente invention vise, selon un troisième aspect, un procédé de transmission d'information sur un premier support de communication, caractérisé en ce qu'il comporte :
- une opération d'ouverture, par l'intermédiaire d'un premier terminal, d'une session de communication avec un moyen de communication situé à distance, sur ledit premier support de communication,
- une opération d'ouverture, par l'intermédiaire d'un deuxième terminal, d'une session de communication avec un moyen de communication situé à distance, sur un deuxième support de communication,
- lorsque les deux sessions sont ouvertes, une opération de réception d'une information confidentielle sur un desdits supports de communication sur lequel l'un des terminaux a une adresse unique, et
- une opération de transmission, sur l'autre desdits supports de communication, d'un message confidentiel représentatif de ladite information confidentielle.

La présente invention vise, selon un quatrième aspect, un procédé de transmission d'information sur un premier support de transmission, caractérisé en ce qu'il comporte :
- une opération d'ouverture d'une session de communication avec un moyen de communication situé à distance, sur ledit premier support de transmission,
   et, durant ladite session :
   . une opération de génération d'une information confidentielle et de transmission de ladite information confidentielle sur un deuxième support de transmission à un terminal possédant une adresse unique sur le deuxième support,
   . une opération de réception, sur le premier support de transmission, d'un message confidentiel susceptible d'être représentatif de ladite information confidentielle, et
   . une opération de vérification de correspondance entre ledit message confidentiel et ladite information confidentielle.

La présente invention vise, selon un cinquième aspect, un procédé de transmission d'information sur un support de transmission dit "deuxième", ledit support de transmission faisant partie d'un réseau de communication, caractérisé en ce qu'il comporte :
- une opération de réception, de la part d'un terminal dit "deuxième", d'un premier message représentatif :
   . d'un identifiant d'un terminal dit "troisième" possédant une adresse unique sur ledit réseau,
   . d'une information confidentielle,
   . d'une information représentative d'un montant de transaction,
- une opération de transmission, au troisième terminal, d'un deuxième message représentatif :
   . de ladite information confidentielle et
   . dudit montant,
- une opération de réception d'un troisième message, de la part dudit deuxième terminal, représentatif d'une validation de transaction, et
- une opération d'incrémentation d'un registre correspondant audit troisième terminal, d'une valeur représentative dudit montant de transaction.

La présente invention vise, selon un sixième aspect, un procédé de transmission d'information sur un support de transmission dit "deuxième", ledit support de transmission faisant partie d'un réseau de communication, caractérisé en ce qu'il comporte :
- une opération de réception, de la part d'un terminal dit "deuxième", d'un premier message représentatif :
   . d'un identifiant d'un terminal dit "troisième" possédant une adresse unique sur ledit réseau,
   . d'une information confidentielle,
   . . d'une information représentative d'un montant de transaction,
- une opération de transmission, au troisième terminal, d'un deuxième message représentatif :
   . de ladite information confidentielle et
   . dudit montant,
- une opération de réception d'un troisième message, de la part dudit deuxième terminal, représentatif d'une validation de transaction, et
- une opération d'incrémentation d'un registre correspondant audit troisième terminal, d'une valeur représentative d'une durée de la première session.

On observe que, selon les cinquième et sixième aspects, de l'invention, l'opération d'incrémentation peut avoir lieu avant ou après l'opération de réception d'un troisième message.

La présente invention vise, selon un septième aspect, un procédé de transmission d'information sur un support de transmission dit "deuxième", ledit support de transmission faisant partie d'un réseau de communication, caractérisé en ce qu'il comporte :
- une opération de réception, de la part d'un terminal dit "deuxième", d'un premier message représentatif :
   . d'un identifiant d'un terminal dit "troisième" possédant une adresse unique sur ledit réseau,
   . d'une information confidentielle,
   . d'une information représentative d'un montant de transaction,
- une opération de transmission, au troisième terminal, d'un deuxième message représentatif :
   . de ladite information confidentielle et
   . dudit montant,
- une opération d'incrémentation d'un registre correspondant audit troisième terminal, d'une valeur prédéterminée.

La présente invention vise, selon un huitième aspect, un procédé de transmission d'information, entre un premier terminal et un deuxième terminal, sur un premier support de transmission appartenant à un réseau de communication,
caractérisé en ce qu'il comporte :
- une opération d'ouverture de session de communication, sur le premier support de transmission entre le premier terminal et le deuxième terminal, et
- une opération de transmission, de la part du deuxième terminal à un troisième terminal raccordé à un deuxième réseau et possédant une adresse unique sur ledit deuxième réseau, d'un premier message représentatif d'une information confidentielle,
- une opération de transmission, au troisième terminal, d'un deuxième message représentatif de ladite information confidentielle, et
- une opération de transmission, sur le premier support de transmission, en provenance du premier terminal et à destination du deuxième terminal, d'un message représentatif de l'information confidentielle.

Dans chacun des aspects de la présente invention, l'utilisateur, d'une part, et la transaction, d'autre part, sont donc authentifiés car la transmission de l'information confidentielle, à l'initiative de l'utilisateur, prouve son identité par la réception de cette information confidentielle. De plus, l'engagement de l'utilisateur dans les deux communications, prouve l'utilisation des deux terminaux, simultanément, par le même utilisateur.

Lorsque l'un des réseaux utilisés est un réseau de communication mobile, la mise en oeuvre de l'invention est entièrement nomade, c'est-à-dire qu'elle peut être appliquée n'importe où, par l'utilisateur du réseau de communication mobile.

En outre, l'invention peut être mise en oeuvre sur n'importe quels terminaux et est indépendante du matériel utilisé. Elle ne nécessite aucune adaptation des terminaux actuels, ni modification, ni ajout de périphériques.

La simplicité de mise en oeuvre de la présente invention rend les tâches d'authentification, de virement, de paiement, intuitives, et elle ne nécessite aucun apprentissage.

. On observe aussi que l'information confidentielle peut être un mot de passe ou un certificat de transaction.

Selon des caractéristiques particulières de chacun des aspects de la présente invention exposés ci-dessus :
- l'information confidentielle est représentative d'un nombre pseudo-aléatoire,
- l'information confidentielle est représentative d'un numéro de session attribué à une session,
- l'information confidentielle est représentative de l'identifiant de l'utilisateur,
- l'information confidentielle est représentative d'un ou plusieurs numéros de compte bancaire et/ou de carte,
- l'information confidentielle est représentative de l'heure et la date de ladite opération d'ouverture de session, et/ou
- l'information confidentielle est modifiée à chacune des sessions.

Grâce à chacune de ces dispositions, l'information confidentielle est renouvelée à chaque session et son usage est limité à une seule session de communication.

Selon des caractéristiques particulières de chacun des aspects de l'invention exposés ci-dessus:
- au cours de l'opération de réception d'une information confidentielle sur un terminal à adresse unique sur un deuxième support de communication, on reçoit, en outre, un montant de transaction, et/ou
- au cours de l'opération de transmission d'un message confidentiel représentatif de l'information confidentielle, on transmet, en outre, un montant de transaction.

Grâce à chacune de ces dispositions, l'invention permet des transactions mettant en oeuvre des montants financiers, telles que des achats, des réservations, des échanges, des emprunts, des mises en gages, des cautions ...

Selon un neuvième aspect, la présente invention vise un procédé de transmission d'information sur un premier support de communication faisant partie d'un réseau de communication, caractérisé en ce qu'il comporte :
- une opération de réception, de la part d'un premier terminal, d'un premier message représentatif :
   . d'un montant d'une transaction envisagée,
   . d'un identifiant d'un débiteur,
- une opération de transmission, sur un deuxième support de communication, à un serveur bancaire, d'un deuxième message représentatif :
   . dudit montant,
   . d'un identifiant dudit débiteur
   . d'une demande d'autorisation de débit,
- une opération de réception ou non de la part dudit serveur bancaire, d'un troisième message représentatif d'une autorisation de débit,
- lorsque l'autorisation est accordée, une opération de transmission, à un deuxième terminal possédant une adresse unique sur un deuxième réseau de communication, d'un quatrième message représentatif d'une information confidentielle,
- une opération de réception, de la part dudit premier terminal, d'un cinquième message représentatif de ladite information confidentielle,
- une opération de vérification de correspondance entre le message confidentielle et l'information confidentielle.

Ce neuvième aspect de la présente invention présente les mêmes avantages que les premier et deuxième aspects. Ces avantages ne sont donc pas rappelés ici.

Selon des caractéristiques particulières de chaque aspect de l'invention, après l'opération de vérification de correspondance, en cas de correspondance, le procédé visé par la présente invention, tel que succinctement exposé ci-dessus comporte une opération d'incrémentation d'un compte au débit dudit débiteur.

Grâce à ces dispositions, une facture correspondant à chaque montant de transaction effectué par le débiteur, peut lui être envoyée.

Selon d'autres caractéristiques particulières de chacun des procédés visés par les différents aspects de la présente invention, ce procédé comporte, après l'opération de réception du premier message, une opération de lecture, dans une base de donnée, de l'adresse unique du deuxième terminal sur le deuxième réseau.

Grâce à ces dispositions, le débiteur n'a pas a fournir cette adresse, d'une part, et cette adresse est certifiée, d'autre part.

Selon d'autres caractéristiques particulières de chacun des procédés visés par les différents aspects de la présente invention, ce procédé comporte, après l'opération de réception du premier message, une opération de lecture, dans une base de donnée, d'un identificateur dudit serveur bancaire.

Grâce à ces dispositions, le débiteur n'a pas a fournir cet identificateur, ni une carte bancaire, d'une part, et cet identificateur peut être préliminairement vérifié, d'autre part.

Selon un dixième aspect, la présente invention vise un procédé de transmission d'information sur un premier support de communication faisant partie d'un réseau de communication, caractérisé en ce qu'il comporte :
- une opération de réception, de la part d'un premier terminal, d'un premier message représentatif :
   . d'un montant d'une transaction envisagée,
   . d'un identifiant d'un débiteur,
- une opération d'autorisation, ou non, de débit d'un compte bancaire,
- lorsque l'autorisation est accordée, une opération de transmission, à un deuxième terminal possédant une adresse unique sur un deuxième réseau de communication, d'un deuxième message représentatif de l'information confidentielle,
- une opération de réception, de la part dudit premier terminal, d'un troisième message représentatif de ladite information confidentielle,
- une opération de vérification de correspondance entre le message confidentielle et l'information confidentielle et
- dans le cas où la correspondance est vérifiée, une opération de débit dudit montant sur ledit compte bancaire.

Selon des caractéristiques particulières de chacun des aspects du procédé visé par la présente invention, celui-ci comporte une opération de saisie manuelle, au cours de laquelle l'utilisateur saisit un message confidentiel représentatif de l'information confidentielle.

Grâce à ces dispositions, l'engagement de l'utilisateur est garantie par la.saisie manuelle qu'il effectue.

Selon des caractéristiques particulières de chacun des aspects du procédé visé par la présente invention, celui-ci comporte une opération de sélection de transmission, au cours de laquelle, en fonction de critères prédéterminés, les transmissions sont classées en deux groupes, l'un concernant les transmission dites « à sécuriser » et l'autres les transmissions dites « normales », les transmissions normales ne donnant pas lieu à plus d'une opération de transmission sur un support de communication.

Grâce à ces dispositions, le procédé visé par la présente invention n'est mis en oeuvre que pour une partie des transmissions, en fonctions de critères prédéterminés.

Selon des caractéristiques particulières de chacun des aspects du procédé visé par la présente invention, au cours de ladite opération de sélection, on met en oeuvre un montant limite de transaction, les transmissions dites « à sécuriser » étant celles auxquelles sont associées les montants de transaction supérieurs audit montant limite.

Grâce à ces dispositions, le critère de sélection des transmissions qui sont sécurisées par la mise en oeuvre de la présente invention sont celles qui concernent des montants de transaction supérieurs au montant limite.

Selon des caractéristiques particulières de chacun des aspects du procédé visé par la présente invention, celui-ci comporte une opération de transmission d'une adresse unique sur l'un desdits réseaux.

Selon des caractéristiques particulières de chacun des aspects du procédé visé par la présente invention, au cours de ladite opération de transmission d'une adresse unique, on transmet un certificat contenant une information représentative du ladite adresse unique.

Grâce à chacune de ces dispositions, c'est l'utilisateur lui-même ou, respectivement, son ordinateur, qui, de manière cryptée ou non, transmet sur l'un des réseaux une adresse unique dont il dispose sur un des réseaux utilisés.

Selon des caractéristiques particulières de chacun des aspects du procédé visé par la présente invention, ledit certificat répond à un protocole de sécurisation de paiement et comporte une information représentative de ladite adresse unique.

Grâce à ces dispositions, l'adresse unique transmise avec le certificat est protégé par le protocole de sécurisation de paiement.

La présente invention vise aussi une mémoire, amovible ou non, qui conserve des instructions d'un programme susceptible d'être exécuté par un processeur et adapté à mettre en oeuvre le procédé de transmission tel que succinctement exposé ci-dessus.

La présente invention vise, en outre, un serveur informatique, caractérisé en ce qu'il est adapté à mettre en oeuvre le procédé de transmission tel que succinctement exposé ci-dessus.

Ce dixième aspect, ce serveur et cette mémoire présentant les mêmes caractéristiques particulières et les mêmes avantages que les neuf premiers aspects de la présente invention, exposés ci-dessus, ceux-ci ne sont pas rappelés ici.

D'autres avantages, buts et caractéristiques de l'invention ressortiront de la description qui va suivre, faite en regard des dessins annexés dans lesquels :
- la figure 1 est un schéma de principe du procédé de la présente invention ;
- la figure 2 représente un schéma particulier de mise en oeuvre de la présente invention ;
- la figure 3 représente une architecture système capable de supporter la mise en oeuvre de la présente invention ;
- la figure 4 représente une succession d'opérations génériques mises en oeuvre par les éléments illustrés en figures 2 et 3 ;
- la figure 5 représente une succession d'opérations mises en oeuvre par les éléments illustrés en figures 2 et 3, dans le cadre d'une application de la présente invention à l'authentification; et
- la figure 6 représente une succession d'opérations mises en oeuvre par les éléments illustrés en figures 2 et 3, dans le cadre d'une application de la présente invention à la certification de messages ;
- la figure 7 représente une succession d'opérations mises en oeuvre par les éléments illustrés en figures 2 et 3, dans le cadre d'une application de la présente invention au paiement électronique en ligne, dans le cas d'un service sans abonnement ;
- la figure 8 représente une succession d'opérations mises en oeuvre par les éléments illustrés en figures 2 et 3, dans le cadre d'une application de la présente invention au paiement électronique en ligne, dans le cas d'un service avec abonnement ;
- la figure 9 représente une succession d'opérations mises en oeuvre par les éléments illustrés en figures 2 et 3, dans le cadre d'une application de la présente invention au paiement avec un terminal de paiement électronique connu ;
- la figure 10 représente une succession d'opérations mises en oeuvre par les éléments illustrés en figures 2 et 3, dans le cadre d'une autre application de la présente invention au paiement électronique en ligne avec un tiers de confiance, dans le cas d'un service sans abonnement ;
- la figure 11 représente, schématiquement, des communications de messages mises en oeuvre dans une application de la présente invention en combinaison avec un protocole de paiement connu sous le nom de « SET » (acronyme de « Secure Electronic Transaction » pour transaction électronique sécurisée)
- la figure 12 représente, schématiquement, des communications de messages mises en oeuvre dans une application de la présente invention en combinaison avec un protocole de paiement connu de l'homme du métier sous le nom de Globeld (marque déposée) ou Kleline (marque déposée) ; et
- la figure 13 représente, schématiquement, des communications de messages mises en oeuvre dans une application de la présente invention en combinaison avec un protocole de communication sécurisé connu sous le nom de « SSL » (acronyme de « Secure Socket Level » pour niveau de sécurité (??).

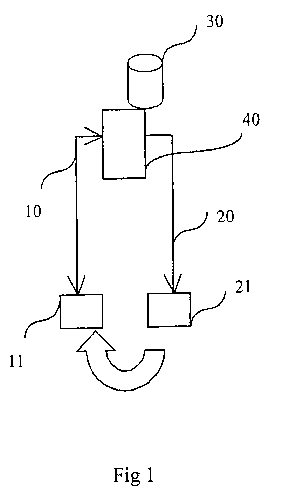

En **figure 1** sont représentés :
- un premier réseau 10,
- un premier terminal de premier réseau 11,
- un deuxième terminal de réseau, aussi appelé par la suite " serveur de données et de messages " 40,
- un deuxième réseau 20,
- un troisième terminal de deuxième réseau 21, et
- un serveur d'information 30.

Selon l'invention, l'utilisateur du premier terminal 11 est identifié par son adresse unique sur le deuxième réseau 20.

Celui-ci est préférentiellement sécurisé, c'est-à-dire que chaque adresse y est certifiée par un tiers de confiance, et, en outre, l'information transmise est confidentielle. Le tiers considéré est préférentiellement un opérateur de téléphonie, ou, plus généralement, tout organisme qui dispose d'une base de données d'utilisateur d'un terminal à adresse unique.

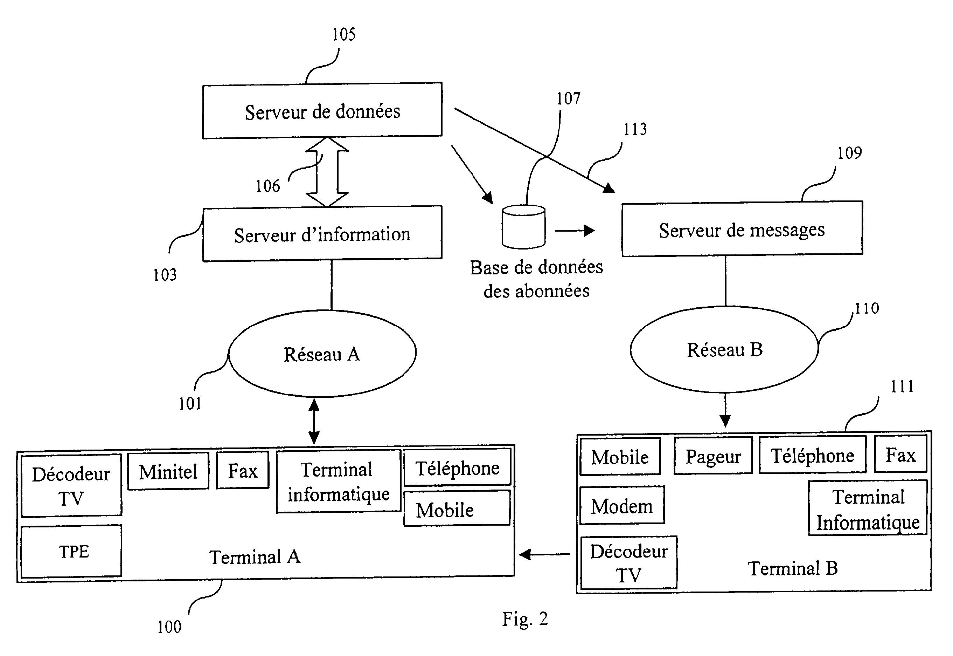

Le terminal de premier réseau 11 peut être, par exemple, un téléphone, un terminal informatique, un télécopieur, un terminal télématique, un téléviseur équipé d'un boîtier adapté à recevoir et à émettre des données informatiques (boîtier communément appelé un décodeur de télévision), un terminal de paiement électronique (figure 2).

Le terminal de deuxième réseau 21 peut être, par exemple, un téléphone, un télécopieur, un terminal télématique, un décodeur de télévision, un téléphone mobile ou un récepteur de messages («pageur») ou un assistant personnel numérique (communément appelé «PDA»).

Dans un premier mode de réalisation de la présente invention, dans un premier temps, l'utilisateur utilise le terminal 11 de premier réseau 10 pour entrer en communication avec le serveur d'information 30. Il ouvre ainsi une session de communication entre le terminal 11 et le deuxième terminal de réseau 40. Ensuite, le serveur d'information 30 fournit une information confidentielle à l'utilisateur, par l'intermédiaire :
- du serveur de données et de messages 40,
- du deuxième réseau 20, et
- du terminal de deuxième réseau 21.

Enfin, l'utilisateur reçoit l'information confidentielle au niveau du terminal du deuxième réseau 21 et effectue une saisie manuelle d'un message confidentiel, constitué ici de l'information confidentielle, pour le transmettre au serveur d'information 30, au cours de la même session, par l'intermédiaire :
- du terminal de premier réseau 11 et
- du premier réseau 10.

Le serveur de données et de messages 40 vérifie alors la correspondance du message confidentiel et de l'information confidentielle, c'est-à-dire si le message confidentiel est représentatif de l'information confidentielle, et, en cas de correspondance, il donne l'accès à des services particuliers, payants ou confidentiels.

L'utilisateur, d'une part, et la transaction, d'autre part, sont donc authentifiés car la saisie manuelle prouve l'identité de l'utilisateur qui reçoit l'information confidentielle ainsi que l'utilisation des deux terminaux simultanément par le même utilisateur.

En **figure 2** sont représentés :
- un premier terminal, dit «utilisateur» 100 relié à un premier support de communication 101 faisant partie d'un réseau de communication ;
- un serveur d'information 103, relié au premier support d'information 101 ;
- un serveur de données 105, relié par une ligne de télécommunication 106 et/ou une ligne informatique 106 au serveur d'information 103;
- un serveur de messages 109, reliée par un deuxième support de communication 110 à un récepteur 111 et par un troisième support de communication 113, au serveur de données 105; et
- une base de données d'abonnés 107 reliée au serveur de message 109 et au serveur de données 105.

Dans le mode de réalisation décrit et représenté ici, le terminal utilisateur 100 est un ordinateur personnel (communément appelé " PC ") ou un ordinateur de réseau (communément appelé " NC "), ou encore un Minitel (marque déposée) qui comporte un modem relié à un réseau de télécommunication filaire, comme par exemple le réseau téléphonique commuté. Le premier support de communication 101 est alors un canal de ce réseau de télécommunication. Le terminal utilisateur 100 met en oeuvre un logiciel de communication de type connu, qui lui permet de communiquer à distance avec le serveur d'information 103, par l'intermédiaire du support de communication.

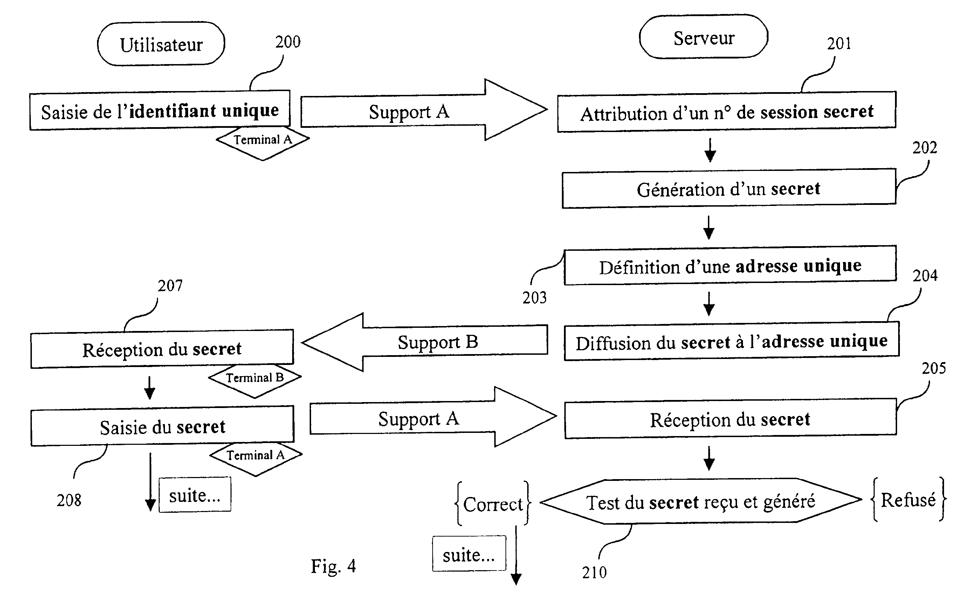

Le serveur d'information 103, relié au premier support d'information 101 est un serveur informatique de type connu, qui est ici adapté à mettre en oeuvre un logiciel spécifique, conforme à l'invention (illustré en l'une des figures 4 à 13).

Le serveur de données 105 est un serveur informatique de type connu qui fonctionne comme il est indiqué ci-dessous, en relation avec le serveur d'information 103, par l'intermédiaire de la ligne 106, elle aussi de type connu.

Le serveur de messages 109 est un système informatique de type connu qui gère un ou des réseaux de communication de types connus, un canal de l'un de ces réseaux constituant un deuxième support de communication. Un canal spécialisé fournit le troisième support 113 pour la communication entre le serveur d'information 103 et le serveur de messages 109.

La base de données d'abonnés 107 est un registre de mémoire de type connu.

On observe ici que la base de données d'abonnés 107 peut être reliée directement à plusieurs systèmes informatiques :
- à celui du fournisseur de service dans le cas d'un réseau externe à une entreprise, en particulier dans certains cas de mise en oeuvre de la présente invention avec un abonnement préalable de l'utilisateur au service,
- dans l'entreprise, dans le cas où le réseau est interne à l'entreprise,
- à celui d'une banque ou d'un tiers de confiance, en particulier dans le cas d'utilisation de l'invention sans abonnement.

Enfin, dans certains cas, la base de données n'est pas nécessaire, l'adresse unique sur le deuxième réseau étant fournie, sur le premier réseau, soit par un certificat de protocole de paiement stocké sur le poste (ou « ordinateur ») client, soit par l'utilisateur, lui-même.

Le deuxième support de communication 110 est un réseau de communication de type connu. Sur ce deuxième réseau, chaque récepteur possède une adresse unique qui est certifiée au moment de l'attribution de l'adresse du récepteur 111.

Le récepteur 111 est, dans le mode de réalisation décrit et représenté ici, un téléphone portable (communément appelé «mobile») ou un récepteur de message (communément appelé " pageur "), un télécopieur ou un téléphone fixe ou un terminal équipé d'un modem. Il est adapté à recevoir un message confidentiel et à le mettre à disposition de l'utilisateur, par exemple par affichage sur écran, émission vocale ou impression sur papier. En variante, les serveurs d'information 103 et le serveur de messages 109 sont confondus.

On observe ici que :
- dans le cas où le récepteur 111 ne sert à l'utilisateur qu'à recevoir une information confidentielle sans émettre le message confidentiel, il n'est pas nécessaire qu'il permette l'émission sur le réseau 110,
- en revanche, lorsque, conformément à certaines variantes de la présente invention, le récepteur 111 sert d'une part à recevoir l'information confidentielle et d'autre part à émettre le message confidentiel, il est nécessaire qu'il permette l'émission sur le réseau 110.

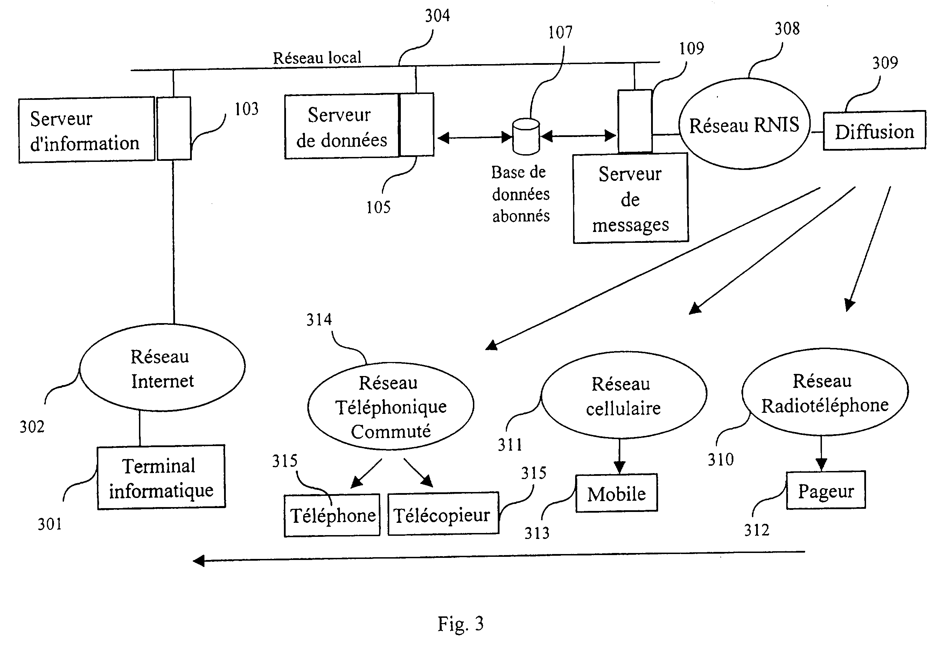

En **figure 3**, on observe, dans une architecture matérielle et logicielle permettant la mise en oeuvre de la présente invention :
- un terminal informatique 301,
- un réseau informatique 302,
- un serveur d'information 103,
- un réseau local 304,
- un serveur de données 105,
- une base de données 107,
- un serveur de messages 109,
- un réseau 308,
- un moyen de diffusion 309,
- un réseau de radiotéléphonie 310,
- un réseau de téléphonie cellulaire 311,
- un récepteur de messages alphanumériques 312 (appelé " pageur "),
- un téléphone mobile 313,
- un réseau commuté 314, et
- un téléphone ou télécopieur 315.

Le terminal informatique 301 est, par exemple un micro-ordinateur connu sous le nom de «PC». Il comporte un modem permettant la communication en émission et en réception, avec le réseau informatique 302. Le réseau informatique 302 est ici le réseau informatique mondial connu sous le nom d'«intemet». Le serveur d'information 103 est de type connu pour la mise en oeuvre de sites de fournisseurs de services sur le réseau 302.

Le réseau local 304 est de type connu. C'est un réseau d'entreprise, par exemple du type LAN Manager (marque déposée) Netware (marque déposée de la société NOVELL, ce nom étant aussi une marque déposée).

Le serveur de données 105 et le serveur de message 109 sont de types connus. La base de données 107 est de type connu.

Le réseau 308 est de type connu, par exemple de type Réseau Numérique à Intégration de Service (« RNIS »).

Le moyen de diffusion 309 est un émetteur hertzien, de type connu pour la mise en oeuvre du réseau de communication mobile 310. Il est, par exemple cellulaire ou par satellite.

Dans le mode de réalisation décrit et représenté en figure 3, au moins l'un des trois réseaux de communication suivants est utilisé :
- le réseau de radiotéléphonie 310 qui ne permet que la communication dans le sens de la diffusion depuis un émetteur vers des récepteurs de messages alphanumériques comme le récepteur 312, sans que ceux-ci ne puissent émettre de signaux à distance,
- un réseau de téléphonie mobile 311, permettant la communication en particulier avec des téléphones mobiles, comme le téléphone 313, et
- un réseau commuté 314 permettant ici la communication avec un téléphone fixe ou un télécopieur fixe 315.

Ces trois réseaux fonctionnent par abonnement, avec certification de l'identité de l'abonné. Sur chacun de ces réseaux, le récepteur possède une adresse unique, c'est-à-dire que l'adresse qui lui est attribuée n'est pas attribuée à un autre récepteur (sauf dans certains cas d'abonnements groupés demandés par l'utilisateur). Cette adresse unique s'apparente à un numéro de téléphone et/ou à un numéro de carte SIM (acronyme de « Subscriber Identity Module » pour « module d'identité d'abonné »), module sécurisé d'identification du portable, par exemple, dans le cas d'un réseau de télécommunication mobile connu sous le nom de « GSM » (acronyme de « Global System for Mobile » pour « système globale pour mobiles »).

On observe ici que les appareils destinés à fonctionner sur le réseau GSM utilisent une carte à microprocesseur. Cette carte fournit aux modes particuliers de l'invention qui la mettent en oeuvre l'avantage d'une double sécurité.

Dans le cas illustré en figure 3, c'est préférentiellement le même utilisateur qui met en oeuvre le terminal informatique 301, d'une part, et le récepteur alphanumérique 312, le téléphone mobile 313, le télécopieur fixe ou le téléphone fixe, d'autre part.

Les figures 4 à 9 qui illustrent différentes applications de la présente invention, utilisent le même formalisme : sur chacune de ces figures, les opérations sont représentées de haut en bas, dans l'ordre de leur succession chronologique. Sur ces figures, sont représentées :
- sur la colonne verticale la plus à gauche et sous forme de rectangles, les opérations effectuées par l'utilisateur, en mettant en oeuvre soit le terminal relié au premier support de communication («terminal A») soit le terminal relié au deuxième support de communication («terminal B»), le terminal utilisé étant inscrit dans un losange auquel le rectangle représentant l'opération considérée se superpose ;
- sur une colonne centrale, des transmissions d'information successives sur l'un ou l'autre support de communication (« A » pour le réseau informatique 302 ou « B » pour le réseau de télécommunication les réseaux 308, 310, 311 et/ou 314), sous forme de flèches dont le sens correspond au sens de communication, c'est-à-dire que le sens de gauche à droite, correspond au sens utilisateur vers serveur et que le sens de droite à gauche correspond au sens serveur vers utilisateur.

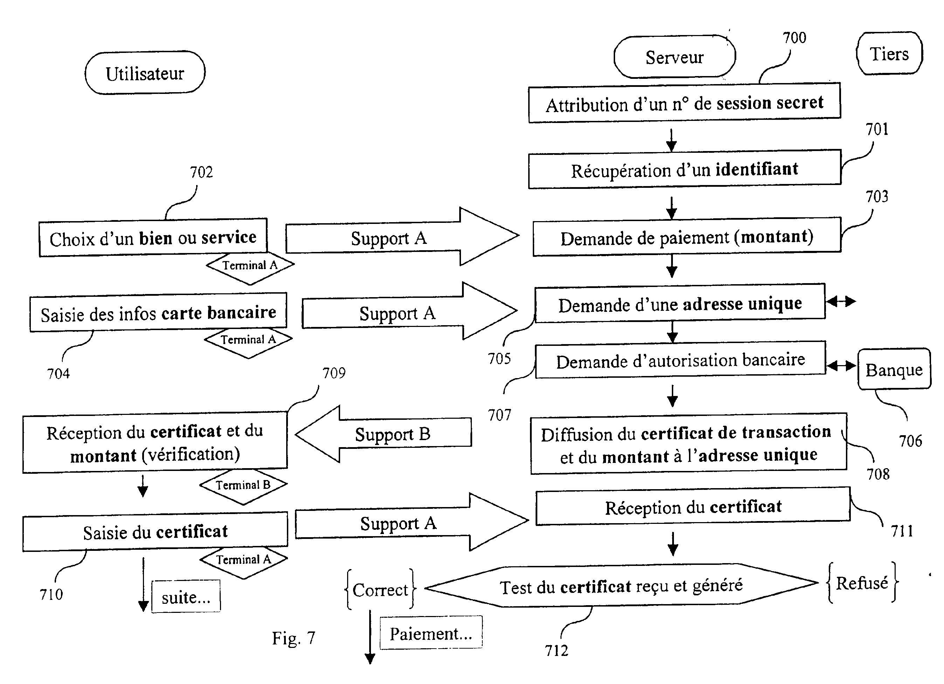

On observe ici que pour chaque transmission d'information, plusieurs signaux peuvent être échangés entre les systèmes électroniques mis en oeuvre (synchronisation, sélection de protocole de communication, information, redondances, acquittement de transmission, retransmission en cas d'erreur de transmission, ...). Dans ces flèches, le serveur «A» correspond au premier réseau et le serveur «B» au deuxième réseau ;
- sur une colonne verticale plus à droite que les deux précédentes (la plus à droite en figures 4 à 6 et 9), sous forme de rectangles, les opérations effectuées par le serveur de données 105; et
- en figures 7, 8 et 10, sur une colonne verticale située la plus à droite, un serveur mis en communication avec le serveur de données 105.

En **figure 4**, on observe une succession d'opérations mises en oeuvre dans certaines applications de l'invention, par les éléments illustrés en figures 2 et 3
- au cours d'une opération 200, l'utilisateur du terminal utilisateur 101 entre en communication avec le serveur d'information 103, par l'intermédiaire du premier support de communication. Au cours de cette opération 200, il fournit un identifiant unique (par exemple un numéro d'abonné, un nom ou une adresse physique) ;
- au cours de l'opération 201, le serveur d'information 103 attribue un numéro de session unique dès la connexion du terminal «utilisateur» 100 au serveur d'information 103. Au cours de cette opération 201, le serveur d'information 103 transmet l'identifiant au serveur de données 105;
- au cours de l'opération 202, le serveur de données 105 calcule une information confidentielle aussi appelée par la suite «secret», au serveur de messages 109. A cet effet, le serveur de données 105 calcule le secret comme étant une représentation d'une fonction algorithmique utilisant un invariant (c'est-à-dire une valeur qui ne varie pas d'une session à l'autre, comme l'identifiant, par exemple), un variant (c'est-à-dire une valeur qui varie à chaque sessions), pour éviter les répétitions (numéro de session, par exemple) et d'un marqueur temporel (c'est-à-dire d'une valeur d'horloge) afin de borner l'utilisation d'un secret dans le temps. Préférentiellement, il met en oeuvre une fonction de calcul d'information confidentielle (ou «secret») irréversible, c'est-à-dire dont on ne peut retrouver l'information d'entrée lorsque l'on connaît celle de sortie. Pour la mise en oeuvre de l'opération 202, le lecteur pourra se référer à des livres d'algorithmes de sécurité bien connus, et en particulier aux descriptions des fonctions connues sous les noms de «hashing», «Message Digest», et «SHA»;
- l'opération 203 prend plusieurs formes différentes selon que l'identifiant est déjà dans la base de données ou non : dans l'affirmative, l'adresse unique y est lue, dans la négative, il est fait appel à un tiers de confiance, qui est, ici, l'opérateur du deuxième réseau ou tout autre organisme habilité à jouer le rôle de tiers de confiance ;
- au cours de l'opération 204, l'adresse unique du récepteur 111 est déterminée : elle est représentative, dans la base de données 107, de l'identifiant transmis par le serveur d'information 103 au serveur de message 109, au cours de l'opération 203;
- au cours de l'opération 204, le serveur de messages 109 transmet, par l'intermédiaire du réseau 110, l'information confidentielle transmise au cours de l'opération 203 au récepteur 111 qui possède ladite adresse unique ;
- au cours de l'opération 207, l'information confidentielle, aussi appelée ici «secret» est fournie à l'utilisateur, soit en étant affichée sur l'afficheur du récepteur 111, soit en étant donnée de manière vocale ou télécopiée;
- au cours de l'opération 208, l'utilisateur fournit au serveur d'information 103, qui, lui-même, le retransmet au serveur de données 105, un message confidentiel représentatif de l'information confidentielle (par exemple identique à cette information confidentielle ou «secret»), par l'intermédiaire du clavier du terminal utilisateur 100 ;
- au cours de l'opération 205, le serveur d'information 103 reçoit ce message confidentiel ;
- au cours du test 210, le serveur de données 105 détermine si ce message confidentiel est représentatif de l'information confidentielle générée par le serveur de données 105, au cours de l'opération 202, ou non ;
- lorsque le résultat du test 210 est positif, le serveur de données 105 donne à l'utilisateur l'accès aux ressources protégées ;
- lorsque le résultat du test 210 est négatif, le serveur de données 105 transmet, à l'utilisateur, un message d'erreur, en précisant éventuellement une cause d'échec (trop de temps écoulé entre la transmission de l'information confidentielle et sa réception, ...) et l'accès aux ressources protégées est refusé à l'utilisateur.

Enfin, la suite de la session ouverte sur le premier support de communication est de type connu, mais, grâce à la mise en oeuvre de la présente invention, l'utilisateur est authentifié de manière forte.

On observe ici que, même si le secret venait à être connu, du fait que ce secret correspond au numéro de session unique attribué dynamiquement par le serveur d'information 103 et du fait que la session reste ouverte (mode connecté) jusqu'à l'envoi du secret, ce secret ne pourrait être utilisé pour réaliser des opérations frauduleuses. En effet, toute nouvelle session ouverte se verrait alors attribuer un autre secret

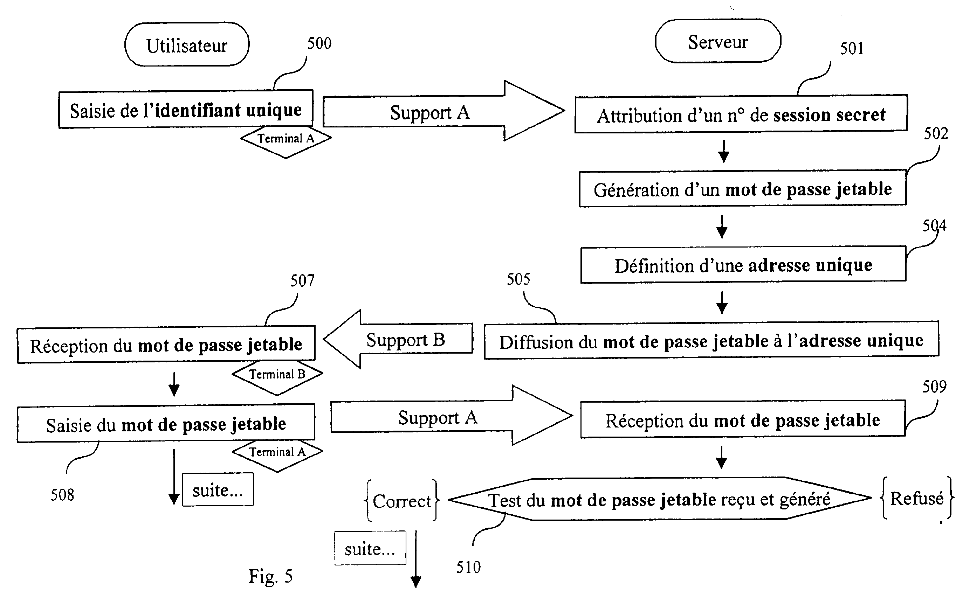

En **figure 5**, on observe une succession d'opérations mises en oeuvre par les éléments illustrés en figures 2 et 3, dans une application de l'invention à l'authentification, pour accès à des données protégées :
- au cours d'une opération 500, l'utilisateur du terminal utilisateur 101 entre en communication avec le serveur d'information 103, par l'intermédiaire du premier support de communication. Au cours de cette opération 500, il fournit un identifiant unique (par exemple un numéro d'abonné, un nom, ou une adresse physique) ;
- au cours de l'opération 501, le serveur d'information 103 attribue un numéro de session unique dès la connexion du terminal utilisateur au serveur d'information 103. Au cours de cette opération 501, le serveur d'information 103 transmet l'identifiant au serveur de données 105;
- au cours de l'opération 502, le serveur de données 105 calcule une information confidentielle aussi appelée par la suite «mot de passe jetable», au serveur de messages 109. A cet effet, le serveur de données 105 calcule l'information confidentielle à partir d'un invariant (l'identifiant, par exemple), d'un variant pour éviter les répétitions (numéro de session, par exemple) et d'un marqueur temporel (l'horloge) afin de borner l'utilisation d'un secret dans le temps. Préférentiellement, il met en oeuvre une fonction de calcul d'information confidentielle irréversible, c'est-à-dire dont on ne peut retrouver l'information d'entrée lorsque l'on connaît celle de sortie. Pour la mise en oeuvre de l'opération 502, le lecteur pourra se référer aux livres mentionnés plus haut ;
- au cours de l'opération 504, l'adresse unique du récepteur 111 est déterminée : elle est représentative, dans la base de données 107, de l'identifiant transmis par le serveur d'information 103 au serveur de message 109, au cours de l'opération 503;
- au cours de l'opération 505, le serveur de messages 109 transmet, par l'intermédiaire du réseau 110, l'information confidentielle aussi appelée ici «mot de passe jetable», au cours de l'opération 503 au récepteur 111 qui possède ladite adresse unique ;
- au cours de l'opération 507, l'information confidentielle, aussi appelée ici «mot de passe jetable» est fournie à l'utilisateur, soit en étant affichée sur l'afficheur du récepteur 111, soit en étant donnée de manière vocale ou télécopiée;
- au cours de l'opération 508, l'utilisateur fournit au serveur d'information 103, qui, lui-même, le retransmet au serveur de données 105, un message confidentiel représentatif de l'information confidentielle (par exemple identique à cette information confidentielle, ou «mot de passe jetable»), par l'intermédiaire du clavier du terminal utilisateur 100;
- au cours de l'opération 509, le serveur d'information 103 reçoit ce message confidentiel ;
- au cours du test 510, le serveur de données 105 détermine si ce message confidentiel est représentatif de l'information confidentielle générée par le serveur de données 105, au cours de l'opération 503, ou non ;
- lorsque le résultat du test 510 est positif, le serveur de données 105 valide l'accès à l'information protégée ;
- lorsque le résultat du test 510 est négatif, le serveur de données 105 transmet un message d'erreur et d'invalidation d'accès, en précisant éventuellement une cause d'échec (trop de temps écoulé entre la transmission de l'information confidentielle et sa réception, ...) et l'accès à l'information protégée est refusé.

Enfin, la fin de la session est de type connu.

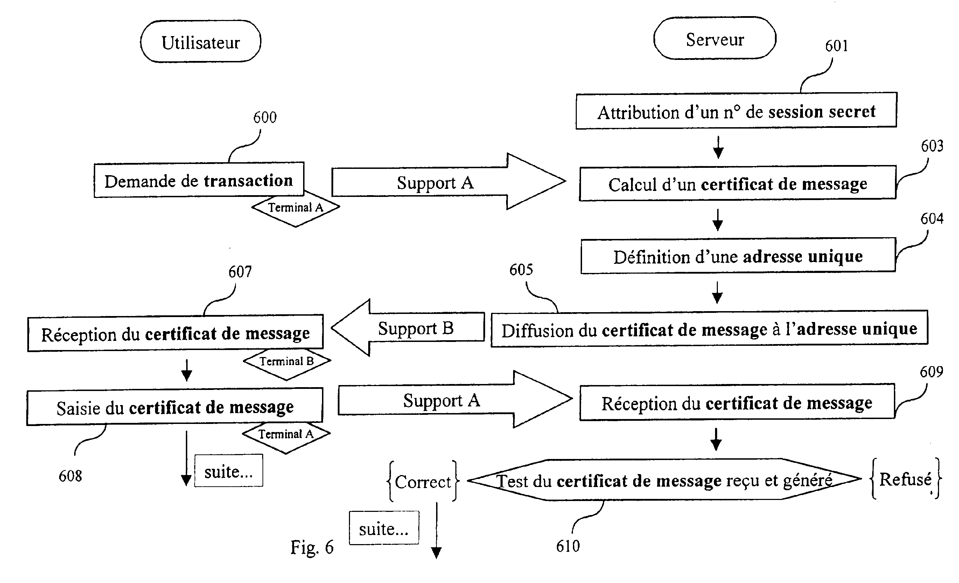

En **figure 6**, on observe une succession d'opérations mises en oeuvre par les éléments illustrés en figures 2 et 3, dans une application de l'invention à la certification de message :
- à la suite d'une opération d'ouverture de session, non représentée, entre le terminal utilisateur 100 et le serveur d'information 103,
- au cours de l'opération 601, le serveur d'information 103 attribue un numéro de session unique ;
- au cours d'une opération 600, l'utilisateur du terminal «utilisateur» 100 initie, sur le premier support de communication, une procédure de transaction (par exemple virement de compte à compte, commande ou ordre boursier) (voir ci-dessus en regard de la figure 4) ;
- au cours de l'opération 603, le serveur de données 105 calcule une information confidentielle aussi appelée, par la suite, «certificat de message» à partir d'un invariant- (l'identifiant, par exemple), d'un variant pour éviter les répétitions (numéro de session, par exemple) et d'un marqueur temporel (l'horloge) afin de borner l'utilisation d'un secret dans le temps. Préférentiellement, il met en oeuvre une fonction de calcul d'information confidentielle irréversible, c'est-à-dire dont on ne peut retrouver l'information d'entrée lorsque l'on connaît celle de sortie. Pour la mise en oeuvre de l'opération 603, le lecteur pourra se référer aux livres mentionnés plus haut ;
- au cours de l'opération 604, l'adresse unique du récepteur 111 est déterminée : elle est représentative, dans la base de données 107, de l'identifiant transmis, par le serveur d'information 103, au serveur de message 109, au cours de l'opération 603;
- au cours de l'opération 605, le serveur de messages 109 transmet, par l'intermédiaire du réseau 110, l'information confidentielle aussi appelée ici «certificat de message», transmis au cours de l'opération 603 au récepteur 111 qui possède ladite adresse unique ;
- au cours de l'opération 607, l'information confidentielle, aussi appelée ici «certificat de message» est fournie à l'utilisateur, soit en étant affichée sur l'afficheur du récepteur 111, soit en étant donnée de manière vocale ou télécopiée;
- au cours de l'opération 608, l'utilisateur fournit au serveur d'information 103, qui, lui-même, le retransmet au serveur de données 105, un message confidentiel représentatif de l'information confidentielle (par exemple identique à cette information confidentielle, ou «certificat de message»), par l'intermédiaire du clavier du terminal utilisateur 100;
- au cours de l'opération 609, le serveur d'information 103 reçoit ce message confidentiel ;
- au cours du test 610, le serveur de données 105 détermine si ce message confidentiel est représentatif de l'information confidentielle générée par le serveur de données 105, au cours de l'opération 603, ou non ;
- lorsque le résultat du test 610 est positif, le serveur de données 105 valide la transaction effectuée, puis reprend ;
- lorsque le résultat du test 610 est négatif, le serveur de données 105 transmet un message d'erreur et d'invalidation de transaction, en précisant éventuellement une cause d'échec (trop de temps écoulé entre la transmission de l'information confidentielle et sa réception, ...) et ne réalise pas la transaction.

Enfin, la fin de la session est de type connu.

Selon une variante non représentée :
- au cours de l'opération 603, le «certificat de message» est aussi déterminé, par le serveur de données 105, à partir d'un montant d'un virement et/ou d'un numéro de compte bancaire émetteur et/ou d'un numéro de compte bancaire récepteur,
- au cours de l'opération 605, le serveur de messages 109 transmet, par l'intermédiaire du réseau 110, l'information confidentielle et le montant du virement, en clair et, plus généralement, une information représentative de la transaction effectuée (produit ou service acquis et quantité concernée) ; et
- au cours de l'opération 607, l'information confidentielle ainsi que le montant sont fournis à l'utilisateur qui vérifie l'intégrité du montant du virement en cours.

En **figure 7**, on observe une succession d'opérations mises en oeuvre par les éléments illustrés en figures 2 et 3, dans une application de l'invention au paiement électronique en ligne, dans le cas d'un service sans abonnement :
- à la suite d'une opération d'ouverture de session, non représentée, entre le terminal utilisateur 100 et le serveur d'information 103,
- au cours de l'opération 700, le serveur d'information 103 attribue un numéro de session unique secret ;
- au cours d'une opération 701, le serveur d'information 103 reçoit de la part du terminal utilisateur 100, un identifiant ;
- au cours d'une opération 702, l'utilisateur du terminal utilisateur 101 choisit un bien ou un service qu'il souhaite acheter, puis initie une procédure de paiement (voir ci-dessus en regard de la figure 4);
- au cours de l'opération 703, le serveur de données 105 reçoit la demande de paiement de la part du terminal utilisateur 100;
- au cours de l'opération 704, l'utilisateur fournit au serveur d'information 103 de l'information confidentielle concernant sa carte de paiement ;
- au cours d'une opération 705, l'adresse unique du récepteur 111 est déterminée : elle est représentative, dans la base de données 107, de l'identifiant transmis par le serveur d'information 103 au serveur de message 109, au cours de l'opération 701 ;
- au cours d'une opération 707, le serveur de données 105 effectue une- demande d'autorisation bancaire au serveur 706 d'une banque où l'utilisateur dispose du compte auquel est rattaché la carte de paiement concernée par l'opération 704. Le serveur de données 105 fournit le montant de la transaction envisagée au serveur bancaire 706. Le serveur d'information 103 reçoit, en retour, de la part du serveur bancaire 706, une autorisation de paiement, selon des modalités bancaires de type connues qui dépendent, en particulier, des conventions passées entre la banque et le client considéré et de l'éventuelle autorisation de découvert sur ledit compte (voir le protocole connu de l'homme du métier sous le nom de « CBSA » pour « Carte Bancaire Système Autorisation ») ;
- au cours d'une opération 708, le serveur d'information 103 calcule une information confidentielle aussi appelée, par la suite «certificat de transaction» à partir :
   . d'un invariant (l'identifiant, par exemple),
   . d'un variant pour éviter les répétitions (numéro de session, par exemple),
   . du montant de la transaction et
   . d'un marqueur temporel (l'horloge) afin de borner l'utilisation d'un secret dans le temps.

Préférentiellement, il met en oeuvre une fonction de calcul d'information confidentielle irréversible, c'est-à-dire dont on ne peut retrouver l'information d'entrée lorsque l'on connaît celle de sortie. Pour la mise en oeuvre de l'opération 708, le lecteur pourra se référer aux livres mentionnés plus haut. Au cours de cette opération 708, le certificat de transaction et le montant de la transaction envisagée sont diffusés, par l'intermédiaire du réseau 110, au récepteur 111 qui possède ladite adresse unique ;
- au cours de l'opération 709, l'information confidentielle, aussi appelée ici «certificat de transaction» est mise à disposition de l'utilisateur, conjointement au montant de la transaction, en clair, soit en étant affichée sur l'afficheur du récepteur 111, soit en étant donnée de manière vocale ou télécopiée, ce qui permet le contrôle, par l'utilisateur, de l'intégrité de la transaction qu'il réalise ;
- au cours de l'opération 710, l'utilisateur fournit au serveur d'information 103, qui, lui-même, le retransmet au serveur de données 105, un message confidentiel identique à (ou, en variante, représentatif de) l'information confidentielle constituée par le certificat de transaction, par l'intermédiaire du clavier du terminal utilisateur 100;
- au cours de l'opération 711, le serveur d'information 103 reçoit ce message confidentiel ;
- au cours du test 712, le serveur de données 105 détermine si ce message confidentiel est représentatif de l'information confidentielle générée par le serveur de données 105, au cours de l'opération 708, ou non ;
- lorsque le résultat du test 712 est positif, le serveur de données 105 valide le paiement effectué, ce paiement étant effectivement réalisé entre les organismes bancaires selon des techniques connues, puis reprend le fonctionnement de présentation d'offres commerciales ;
- lorsque le résultat du test 712 est négatif, le serveur de données 105 transmet à l'utilisateur un message d'erreur et d'invalidation du paiement, en précisant éventuellement une cause d'échec (trop de temps écoulé entre la transmission de l'information confidentielle et sa réception, ...) et le paiement n'est pas effectué.

Enfin, la fin de la session est de type connu.

En variante du mode de réalisation illustré en figure 7, l'opération 707 est effectuée après toutes les autres opérations, mais avant la fin de session.

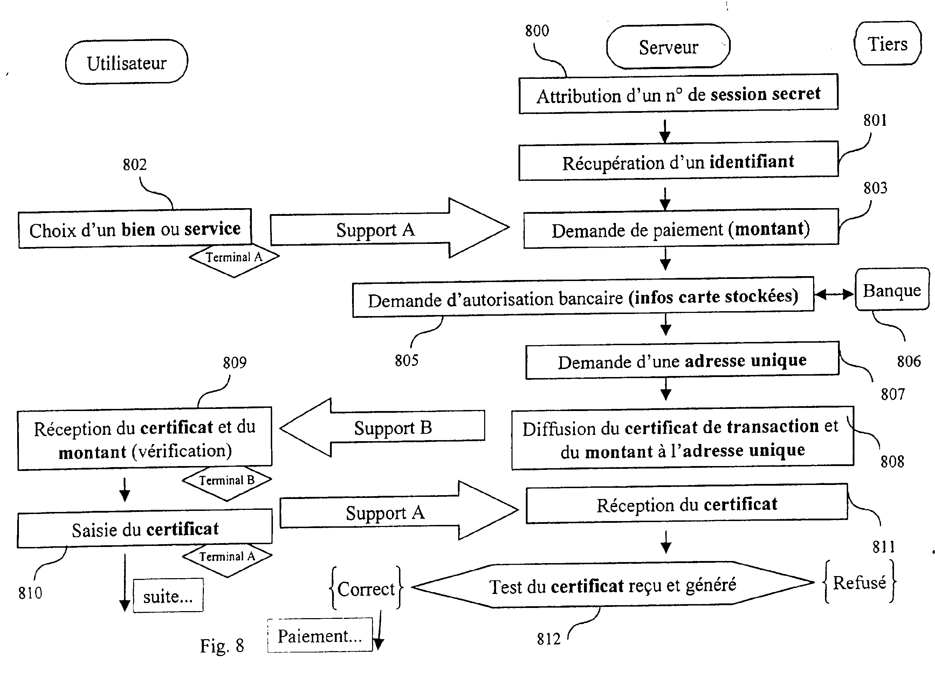

En **figure 8**, on observe une succession d'opérations mises en oeuvre par les éléments illustrés en figures 2 et 3, dans une application de l'invention au paiement électronique en ligne, dans le cas d'un service avec abonnement :
- à la suite d'une opération d'ouverture de session, non représentée, entre le terminal utilisateur 100 et le serveur d'information 103,
- au cours de l'opération 800, le serveur d'information 103 attribue un numéro de session unique secret ;
- au cours d'une opération 801, le serveur d'information 103 reçoit de la part du terminal utilisateur 100, un identifiant ;
- au cours d'une opération 802, l'utilisateur du terminal utilisateur 101 choisit un bien ou un service dont il souhaite avoir le bénéfice, puis initie une procédure de paiement (voir ci-dessus en regard de la figure 4);
- au cours de l'opération 803, le serveur de données 105 reçoit la demande de paiement de la part du terminal utilisateur 100 ;
- au cours de l'opération 805, le serveur de données 105 effectue, préférentiellement de manière sécurisée, une demande d'autorisation bancaire au serveur 706 d'une banque où l'utilisateur dispose du compte auquel est rattaché la carte de paiement concernée par l'opération 804. Il fournit le montant de la transaction envisagée au serveur bancaire 806 ainsi que des données concernant la carte de paiement, ces données étant conservées par le serveur d'information 103 à compter de l'abonnement de l'utilisateur au service considéré. Le serveur d'information 103 reçoit, en retour, de la part du serveur de banque 806, une autorisation de paiement, selon des modalités bancaires qui dépendent du montant disponible sur le compte bancaire considéré et de l'éventuelle autorisation de découvert sur ledit compte ;
- au cours d'une opération 807, l'adresse unique du récepteur 111 est déterminée : elle est représentative, dans la base de données 107, de l'identifiant transmis par le serveur d'information 103 au serveur de message 109, au cours de l'opération 801 ;
- au cours d'une opération 808, le serveur d'information 103 calcule une information confidentielle aussi appelée, par la suite, «certificat de transaction» (voir figure 7);
- au cours de l'opération 809, l'information confidentielle, aussi appelée ici «certificat de transaction» est fournie à l'utilisateur, conjointement au montant de la transaction, en clair, soit en étant affichée sur l'afficheur du récepteur 111, soit en étant donnée de manière vocale ou télécopiée, ce qui permet le contrôle de l'intégrité de la transaction par l'utilisateur ;
- au cours de l'opération 810, l'utilisateur fournit au serveur d'information 103, qui, lui-même, le retransmet au serveur de données 105, un message confidentiel identique à, ou, en variante, représentatif de, l'information confidentielle constituée par le certificat de transaction, par l'intermédiaire du clavier du terminal utilisateur 100;
- au cours de l'opération 811, le serveur d'information 103 reçoit ce message confidentiel ;
- au cours du test 812, le serveur de données 105 détermine si ce message confidentiel est représentatif de l'information confidentielle générée par le serveur de données 105, au cours de l'opération 808, ou non ;
- lorsque le résultat du test 812 est positif, le serveur de données 105 valide le paiement effectué, ce paiement étant ensuite effectivement réalisé entre les organismes bancaires selon des techniques connues, puis reprend le fonctionnement de présentation d'offres commerciales ;
- lorsque le résultat du test 812 est négatif, le serveur de données 105 transmet à l'utilisateur un message d'erreur et d'invalidation du paiement, en précisant éventuellement une cause d'échec (trop de temps écoulé entre la transmission de l'information confidentielle et sa réception, ...) et le paiement n'est pas effectué.

Enfin, la fin de la session est de type connu.

En variante du mode de réalisation illustré en figure 8, l'opération 805 est effectuée après toutes les autres opérations, mais avant la fin de session.

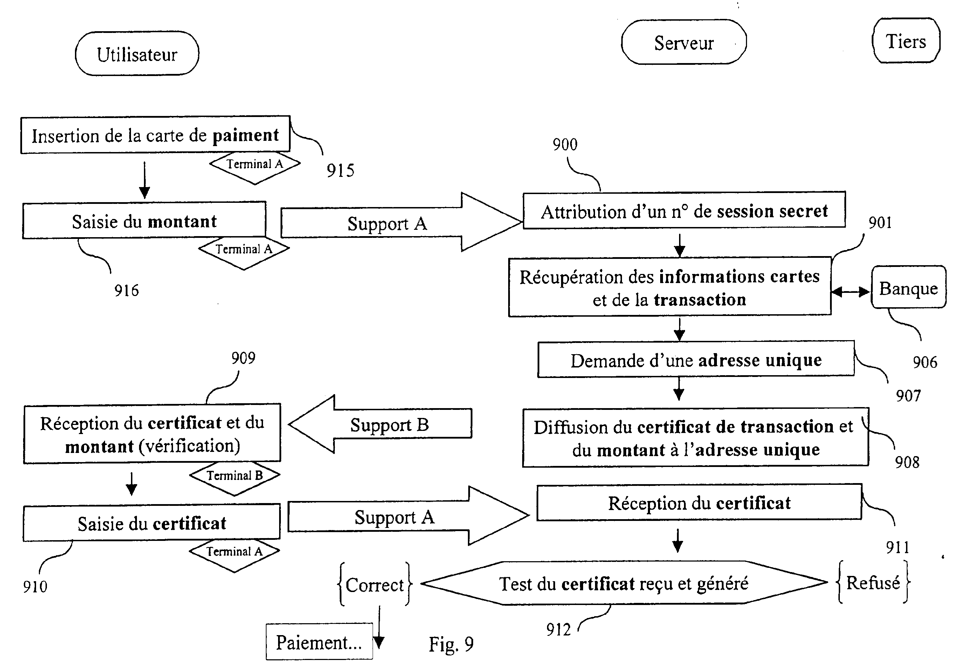

En **figure 9**, on observe une succession d'opérations mises en oeuvre par les éléments illustrés en figures 2 et 3, dans une application de l'invention au paiement avec un terminal de paiement électronique :
- au cours d'une opération 915, l'utilisateur introduit sa carte de paiement dans un terminal de paiement électronique («TPE») qui constitue le terminal dit «utilisateur»;
- au cours d'une opération 916, le commerçant saisit le montant de la transaction sur ledit TPE;
- au cours d'une opération 900, une ouverture de session est effectuée entre le TPE 100, et le serveur d'information 103 et un numéro de session unique et secret est attribué par le serveur de communication 103;
- au cours d'une opération 901, le serveur d'information 103 reçoit de la part du TPE 100, des informations portées par la carte de paiement ainsi que le montant de la transaction en cours, et le serveur d'information transmet une demande de l'identifiant du consommateur auprès de l'organisme bancaire 906 et reçoit cet identifiant en retour ;
- au cours d'une opération 907, l'adresse unique du récepteur 111 est déterminée : elle est représentative, dans la base de données 107, de l'identifiant transmis au cours de l'opération 901;
- au cours d'une opération 908, le serveur d'information 103 calcule une information confidentielle aussi appelée, par la suite, «certificat de transaction» (voir figure 7);
- au cours de l'opération 909, l'information confidentielle, aussi appelée ici «certificat de transaction» est fournie à l'utilisateur, conjointement au montant de la transaction, en clair, soit en étant affichée sur l'afficheur du récepteur 111, soit en étant donnée de manière vocale, ce qui permet le contrôle de l'intégrité de la transaction par l'utilisateur ;
- au cours de l'opération 910, l'utilisateur fournit au serveur d'information 103, qui, lui-même, le retransmet au serveur de données 105, un message confidentiel identique à, ou, en variante, représentatif de, l'information confidentielle constituée par le certificat de transaction, par l'intermédiaire du clavier du TPE 100;
- au cours de l'opération 911, le serveur d'information 103 reçoit ce message confidentiel ;
- au cours du test 912, le serveur de données 105 détermine si ce message confidentiel est représentatif de l'information confidentielle générée par le serveur de données 105, au cours de l'opération 908, ou non ;
- lorsque le résultat du test 912 est positif, le serveur de données 105 valide le paiement effectué, ce paiement étant ensuite effectivement réalisé entre les organismes bancaires selon des techniques connues ;
- lorsque le résultat du test 912 est négatif, le serveur de données 105 transmet à l'utilisateur un message d'erreur et d'invalidation du paiement, en précisant éventuellement une cause d'échec (trop de temps écoulé entre la transmission de l'information confidentielle et sa réception, ...) et le paiement n'est pas effectué.

Une variante de l'opération 916 est la saisie par l'utilisateur de son code personnel aussi appelé «PIN»(acronyme de « Personal Identification Number » pour « numéro d'identification personnel »), avant le lancement de l'opération 900.

Enfin, la fin de la session est de type connu et le client récupère sa carte de paiement ainsi qu'un ticket imprimé portant le montant du paiement effectué.

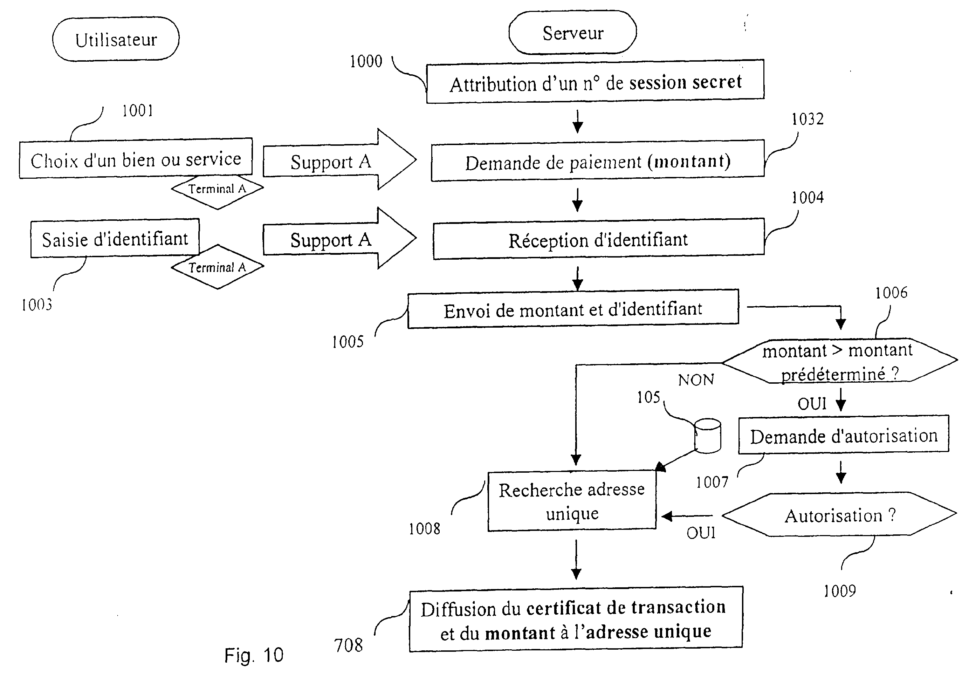

En **figure 10**, on observe une succession d'opérations mises en oeuvre par les éléments illustrés en figures 2 et 3, dans une application de l'invention au paiement électronique en ligne, utilisant un tiers de confiance, dans le cas d'un service sans abonnement, application différente de celle illustrée en figure 7.

Dans cette application, le serveur de données 105 est situé préférentiellement avec le serveur de messages 109, et fait partie, avec celui-ci, du tiers de confiance (aussi appelé tiers certificateur). A titre d'exemple, ces deux serveurs 105 et 109 se trouvent chez l'opérateur de télécommunication.

Dans cette applications, les opérations mises en oeuvre se succèdent de la manière suivante.

A la suite d'une opération d'ouverture de session, non représentée, entre le terminal utilisateur 100 et le serveur d'information 103, au cours d'une opération 1000, le serveur d'information 103 attribue un numéro de session unique secret. Au cours d'une opération 1001, l'utilisateur du terminal utilisateur 101 choisit un bien ou un service qu'il souhaite acheter, puis initie une procédure de paiement, en coopération avec le serveur d'information 103.

Le serveur d'information 103 reçoit alors, au cours d'une opération 1032, une demande de paiement et, en particulier, un montant de la transaction envisagée.

Au cours d'une opération 1003, l'utilisateur du terminal utilisateur 101 fournit un identifiant et, au cours d'une opération 1004, le serveur d'information 103 reçoit cet identifiant de la part du terminal utilisateur 100.

Au cours d'une l'opération 1005, le serveur d'information 103 transmet une demande de paiement ainsi que l'identifiant de l'utilisateur et le montant de la transaction envisagée, au serveur de données 105, par l'intermédiaire de la ligne de télécommunication 106. Au cours d'un test 1006, le serveur de données 105 détermine si le montant de la transaction envisagé est supérieur à un montant prédéterminé.

Lorsque le résultat du test 1006 est négatif, une opération 1008 est effectuée (voir ci-dessous).

Lorsque le résultat du test 1006 est positif, le serveur de données 105 recherche, au cours d'une opération 1007, dans sa base de données d'abonnés, le numéro de la carte bancaire correspondant à l'identificateur transmis et effectue une demande d'autorisation bancaire à un serveur d'une banque où l'utilisateur dispose du compte auquel est rattaché cette carte de paiement.

Au cours d'un test 1009, le serveur de la banque détermine, selon des règles connues en soit, si la transaction envisagée est autorisée, ou non. Lorsque le résultat du test 1009 est négatif, un refus est signifié à l'utilisateur, au cours d'une opération non représentée, par l'intermédiaire du serveur d'information 103 et du terminal utilisateur 101.

Lorsque le résultat du test 1009 est positif, le serveur de données 105 reçoit, au cours de l'opération 1008, de la part du serveur de banque, une autorisation de paiement, selon des modalités bancaires connues.

Au cours de l'opération 1008, l'adresse unique du récepteur 111 est déterminée : elle est représentative, dans la base de données 107, de l'identifiant transmis par le serveur d'information 103 au serveur de message 109, au cours de l'opération 1001.

Puis, les opérations 708 et suivantes exposées en regard de la figure 7, sont effectuées.

Cependant, dans le mode de réalisation illustré en figure 10, lorsque le résultat du test 712 est positif, le serveur de données 105 valide le paiement effectué, puis retourne un accord de paiement au serveur 103, accompagné de l'adresse de l'abonné du service téléphonique (A l'issue de la période de facturation téléphonique du tiers de confiance, ce paiement étant effectivement réalisé entre les organismes bancaires de l'acheteur et du tiers de confiance, selon des techniques connues. De même à l'issue d'une période de paiement, le tiers de confiance effectue la remise commerçant et prélève, éventuellement, des frais de service.), puis reprend le fonctionnement de présentation d'offres commerciales.

En revanche, lorsque le résultat du test 712 est négatif, le serveur de données 105 transmet à l'utilisateur un message d'erreur et d'invalidation du paiement, en précisant éventuellement une cause d'échec (trop de temps écoulé entre la transmission de l'information confidentielle et sa réception, ...) et le paiement n'est pas effectué.

Enfin, la fin de la session est de type connu.

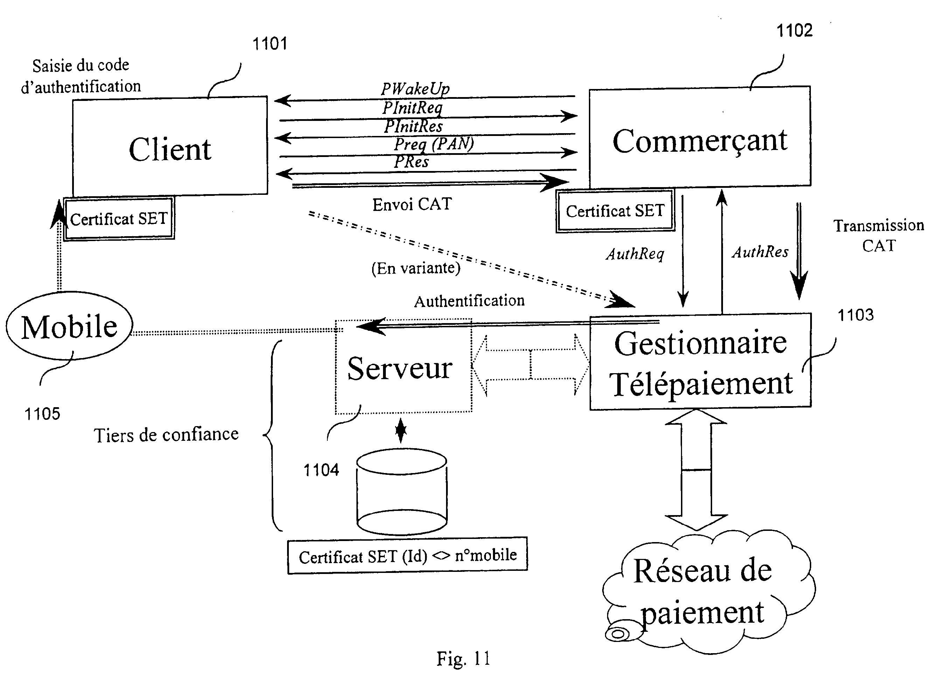

En **figure 11**, on observe un schéma de système de paiement conforme à la présente invention et mettant en oeuvre les protocoles de paiement connus sous le nom de « SET » (acronyme de « Secure Electronic Transaction » pour « transaction électronique sécurisée »). Pour mieux connaître ce type de transaction, le lecteur se reportera à la version 1.0 des spécifications du protocole SET, publiée le 31 Mai 1997. Cette version est incorporée ici par référence.

Pour mémoire, on rappelle que les entreprises VISA (marque déposée) et MASTERCARD (marque déposée) se sont associées pour définir un standard commun de paiement par cartes bancaires à travers des réseaux ouverts : le protocole SET.

Les principaux objectifs de ce protocole SET sont les suivants :
- rendre facile et rapide le développement du commerce électronique,
- créer la confiance sur le réseau entre acheteur et vendeur au moyen d'un échange de certificats,
- séparer le réseau Internet du réseau bancaire,
- garantir l'intégrité et la confidentialité des transactions grâce au chiffrement des messages,
- assurer l'interopérabilité entre standard bancaire ouvert et solution non propriétaire,
- s'appuyer sur des normes déjà existantes.

Les principes et le fonctionnement du protocole SET s'appuient sur trois notions importantes :
- le Gestionnaire de Télépaiement (connu de l'homme du métier sous le nom de « Payment Gateway »), qui assure l'étanchéité entre le domaine Intemet et le domaine bancaire,
- les certificats qui sont des clés publiques qui servent à authentifier les différents acteurs entrant dans la transaction (porteur-client, commerçant, Gestionnaire de Télépaiement),
- le tiers de confiance qui certifie les clés publiques qui deviennent alors des certificats.

L'ensemble du système SET repose sur l'utilisation de certificats. Le tiers de confiance certifie les clés publiques des porteurs-clients, des commerçants et des Gestionnaires de Télépaiement. Le tiers de confiance fait, lui-même, l'objet d'une certification. On a ainsi un système en cascade, où un tiers de confiance d'un niveau supérieur certifie un tiers de confiance d'un niveau inférieur. Le système est hiérarchique et, au sommet, se trouve l'Autorité Suprême qui est connue de tous et qui n'a pas besoin de s'authentifier. L'intérêt d'une telle hiérarchie est de déléguer le travail de certification, tout en garantissant l'ensemble du système.
1) Pour son inscription, le client obtient sa clé en utilisant un logiciel spécifique qui sera intégré dans le navigateur, connu de l'homme du métier sous le nom de « browser » (ou « butineur »). Il entre son numéro de carte bancaire dans le programme. Celui-ci rend un fichier que le client doit renvoyer à l'une des entreprises VISA ou MASTERCARD, celle-ci renvoyant un certificat contenant une clé qui demeurera gravée dans le logiciel stocké sur le poste client.
2) Pour la transaction :
   - le porteur consulte le catalogue sur le serveur et fait son choix. Le serveur commerçant envoie alors au client un bon de commande virtuel (Order Information « Ol ») qui contient les informations sur le produit et le montant, ainsi que le certificat et la clé publique du commerçant et du Gestionnaire de Télépaiement ;
   - le client envoie, au serveur commerçant, son certificat et sa clé publique. Donc, disposant de leur certificat réciproque, ils peuvent procéder à leur identification mutuelle ;
   - le client crée ensuite un PI (acronyme de « Payment Information » pour « Information de Paiement »). Ce PI contient des informations relatives au système bancaire, qui sont destinées exclusivement au Gestionnaire de Télépaiement. Pour cette raison, le client chiffre le PI avec la clé publique du Gestionnaire de Télépaiement. Cette opération terminée, le client assemble le bon de commande virtuel OI et l'information de paiement PI, et signe le tout avec sa clé privée. Ce paquet est envoyé au serveur commerçant.
   - le serveur commerçant est en mesure de vérifier la validité du paquet grâce à la clé publique du client. Il peut donc s'assurer que le client n'a pas modifié le bon de commande OI. Toutefois, il lui est impossible de lire d'information de paiement PI. Le serveur commerçant signe, à son tour, le paquet reçu et le transmet au Gestionnaire de Télépaiement. Le bon de commande émis par le serveur commerçant et l'ordre de paiement émis par le porteur sont liés d'une manière indissociable au moyen de cette signature duale.
   - le Gestionnaire de Télépaiement vérifie les certificats, la signature duale et la cohérence entre le bon de commande (OI) et l'ordre de paiement (PI). Il sert alors d'interface avec le monde traditionnel du paiement par carte.
   - si les conditions habituelles de paiement par carte sont remplies, il confirme la transaction au serveur commerçant.

L'avantage de ce protocole est que, grâce aux certificats, le client et le serveur commerçant peuvent s'identifier mutuellement avant même d'effectuer la transaction.

Les inconvénients de ce protocoles sont que :
- la multiplication des tiers de confiance est lourde à gérer,
- la protection n'est que logicielle,
- les certificats sont stockés sur les machines des clients. Donc, en toute rigueur, l'authentification ne concerne pas le client mais son ordinateur.

En regard de la figure 11, on observe la mise en oeuvre de l'invention dans le cadre de la solution de paiement SET. Ce protocole met en oeuvre une relation tripartite, ordinateur du client 1101 - serveur commerçant 1102 - Gestionnaire de Télépaiement 1103. Chacune de ces entités reçoit des certificats SET générés par un gestionnaire de certification non représenté. A la date du dépôt de la présente demande de brevet, le protocole SET ne permet pas l'authentification de manière forte de l'acheteur, sauf à installer un lecteur de cartes à mémoire.

Dans un premier temps, un client initie l'achat en choisissant un bien ou un service sur un site commerçant d'un réseau informatique. Le client déclenche ensuite le paiement en validant l'achat (par exemple en cliquant sur une icône " validation achat").

Ensuite, le client doit taper un mot de passe statique pour initialiser le paiement, en déchiffrant le certificat SET stocké sur son ordinateur.

Selon une variable non représentée, un mode opératoire consiste à ne pas utiliser de certificat (conformément au protocole SET fonctionnant en mode « 2 Kp »). Dans ce cas, aucun certificat n'est échangé et seule une authentification du client est nécessaire, conformément à la présente invention (ci-dessous).

Les échanges « ordinateur du client - serveur commerçant - Gestionnaire de Télépaiement » s'initient afin de déterminer les paramètres de communication (trames appelées « *PWakeUp », « PlnitReq »* et « *PlnitRes »* dans la spécification du protocole SET), les données contenues dans le certificat Client sont récupérées au niveau du Gestionnaire de Télépaiement (trame *Preq(PAN))* qui les déchiffre et adresse une demande d'authentification du Client au serveur d'authentification 1104.

Ce serveur authentifie la transaction en calculant un code d'authentification de la transaction (« CAT ») et l'envoie, par l'intermédiaire d'un message court (connu de l'homme du métier sous le nom de « SMS », acronyme de « Short Message System » pour « Système de Messages Courts ») au client identifié par son numéro de téléphone mobile 1105 correspondant, dans la base de données abonnés, à l'identifiant déchiffré dans le certificat SET Client qui est reçu par le Gestionnaire de Télépaiement.

Selon une variante non représentée, le numéro de téléphone de l'abonné, sur le deuxième réseau, est inclus, chiffré, dans un champ du certificat client SET. Dans ce cas, il n'est pas nécessaire de disposer d'une base de données effectuant la correspondance entre le numéro de mobile de l'abonné et son identifiant. A la réception du certificat client sur le Gestionnaire de Télépaiement, celui-ci déchiffre le certificat et utilise directement le numéro du mobile contenu dans le certificat pour adresser le code d'authentification de la transaction du client. Ce principe de fonctionnement facilite l'interopérabilité entre les opérateurs de télécommunication et bancaires.

Le client reçoit alors un code d'authentification de transaction sous forme de message confidentiel, conformément à la présente invention. Il saisit ce message sur son ordinateur dans un champ d'authentification prévu à cet effet.

Le code d'authentification de transaction est alors envoyé soit par l'intermédiaire du serveur commerçant, directement au Gestionnaire de Télépaiement, soit le soumet au serveur d'authentification qui le valide et déclenche le paiement.

Selon une variante non représentée, le client reçoit sous forme de message court SMS le montant de la transaction en clair associé au Code d'identification de la transaction afin qu'il vérifie l'intégrité du montant de son achat.

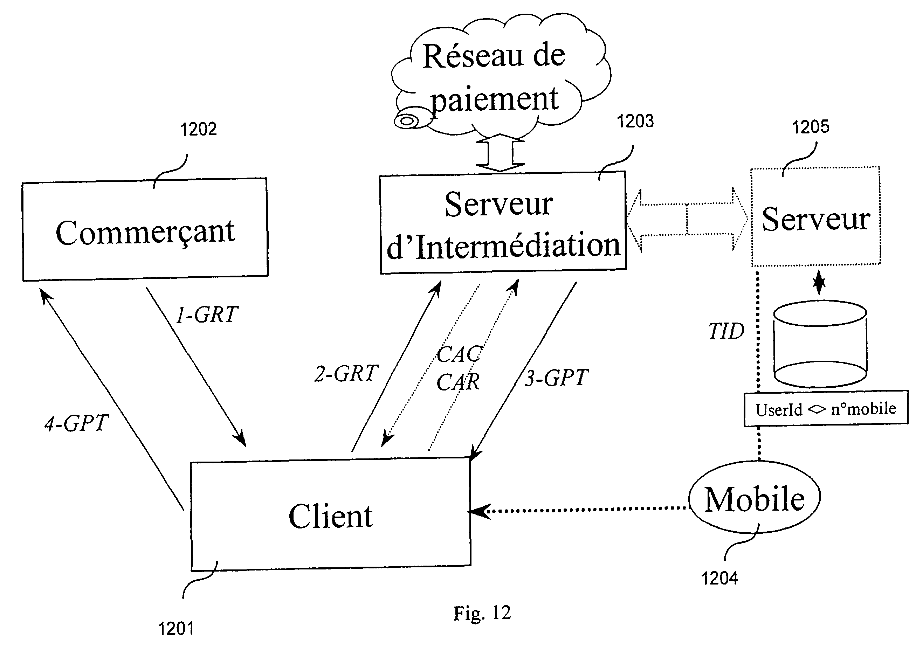

En **figure 12**, on observe la mise en oeuvre de l'invention dans le cadre de la solution de paiement connue de l'homme du métier sous le nom de Globeld (marque déposée) ou Kleline (marque déposée).

. Ce système repose sur le principe de porte-monnaie virtuel (PMV). Il s'agit, en fait, d'un avoir que le client dépose au préalable et qui est débité au fur et à mesure de ses achats. Les transactions sont d'une totale transparence pour le client. C'est le seul cas où client et serveur commerçant n'ont aucune relation directe.

Pour utiliser le système Globeld, il suffit de télécharger une interface (appelée « Klebox », marque déposée, chez Kleline) et d'ouvrir un compte en s'adressant à GlobeOnLine (marque déposée) ou Kleline. Un client peut ouvrir plusieurs porte-monnaies virtuels.

L'ouverture du porte-monnaie virtuel peut s'effectuer instantanément, en ligne. Dans ce cas, les coordonnées bancaires sont chiffrées (technologie RSA) et envoyées par l'intermédiaire du réseau Internet. Elles peuvent également être transmises par le téléphone, la télécopie ou le courrier postal. En réponse, le service utilisant cette solution attribue au client un numéro de porte-monnaie et un code confidentiel.

A l'ouverture du porte-monnaie virtuel, le client effectue deux opérations : il donne son numéro de carte bancaire et les autres informations nécessaires, puis verse, sur le porte-monnaie virtuel, un montant de son choix. Le client peut consulter l'état de son porte-monnaie virtuel et y déposer de nouvelles sommes d'argent à tout moment. Il lui est également permis de retirer tout ou partie de son avoir.

Le porte-monnaie virtuel est lié à une ou plusieurs cartes bancaires. Le client a la possibilité de personnaliser ses cartes bancaires, en leur donnant des noms, afin de ne pas les confondre. Des techniques de dédoublonnage assurent qu'à une carte correspond bien une seule personne.

La transaction type se déroule comme suit :
- le client navigue sur le serveur commerçant. Quand un produit l'intéresse, il clique dessus et se déclare prêt à l'acheter en envoyant un bon de commande au serveur commerçant ;
- celui-ci émet un ticket de caisse à destination du serveur Globeld. Ce ticket de caisse comprend, d'une part, la nature et le montant de l'achat et, d'autre part, le numéro de porte-monnaie virtuel du commerçant. Le tout est signé à partir du code confidentiel de ce dernier. Ensuite, Globeld vérifie ce ticket (le serveur commerçant est alors authentifié) et le fait apparaître sur l'écran de l'ordinateur du client ;
- le client signe électroniquement ce ticket avec son code secret et le retourne à Globeld;
- Globeld authentifie alors le client avec sa clé publique et valide la transaction. Si le client a décidé de payer avec sa carte, la validation a lieu auprès du réseau bancaire avec, éventuellement, une demande d'autorisation au réseau cartes bancaires. Si le client utilise son porte-monnaie virtuel, celui-ci est aussitôt débité du montant de la transaction ;
- L'ordinateur du client émet enfin un bon de caisse vers le serveur commerçant (justificatif de la transaction) qui remet alors la marchandise.

Toutes les communications dans les transactions sont chiffrées à l'aide de clés asymétriques de 512 bits.

Les inconvénients de ce protocole sont que, pour le commerçant, il faut posséder un numéro de porte-monnaie virtuel et un code confidentiel.

En regard de la figure 12, on observe que, dans un mode particulier de réalisation de la présente invention, mis en oeuvre en combinaison avec la solution Globeld :
1. l'ordinateur du client 1201 choisit un bien ou un service sur un site commerçant 1202 et valide son achat.
2. Le serveur commerçant demande alors un " ticket " (récépissé) à l'ordinateur du client (échange *" GRT1* " sur la figure 12).
3. L'ordinateur du client soumet, à son tour, cette demande au serveur d'intermédiation 1203 (échange " *GRT 2* ").
4. La phase d'authentification est alors mise en oeuvre (échange « *CAC/CAR* ») avec un code dynamique appelé « TID » (pour « Transcode Identificateur ») généré par le serveur d'intermédiation et envoyé par l'intermédiaire d'un réseau de télécommunication, sous le forme d'un message court SMS, adressé au téléphone mobile 1204 dont le numéro correspond à l'abonné identifié par l'identificateur « *userld »* du client, stocké dans la base de données 1206 du serveur d'authentification 1205.
   Selon une variante non représentée, on fait calculer et envoyer le code dynamique TID directement par l'opérateur de télécommunication. Dans ce cas, le serveur d'intermédiation transmet les informations nécessaires au calcul du code dynamique TID, à l'opérateur de télécommunication.
   Selon une autre variante non représentée, le client reçoit, sous forme de message court SMS, le montant de la transaction, en clair, associé au code d'authentification de transaction afin qu'il vérifie l'intégrité du montant de son achat.
5. Le code d'authentification de transaction reçu par l'intermédiaire du mobile du client est saisi sur l'ordinateur utilisé par le client et les informations de la transaction sont ajoutés au code dynamique TID et sont envoyées au serveur d'intermédiation (" IS ") qui vérifie la validité du code dynamique TID et valide, avec le serveur d'authentification, le code d'authentification de transaction reçu de l'ordinateur du client.
6. Le serveur d'intermédiation délivre alors un récépissé (échange *« GPT 3 »")* à l'ordinateur du client qui l'adresse ensuite au serveur commerçant (échange « *GPT 4 »).*

Le protocole « SSL » (Secure Socket Level) est un protocole de communication sécurisé entre deux entités. Le lecteur pourra se référer à la version 3.0, des spécifications édictant ce protocole, version de Mars 1996. Cette version est incorporée ici par référence.

le protocole SSL est un protocole développé par NETSCAPE. La phase de négociation au départ permet l'authentification du serveur commerçant et, optionnellement, celle du client. Une fois cette phase terminée, les échanges sont cryptés avec la clé générée par l'ordinateur du client.

Ainsi, le protocole de sécurité SSL code les données, authentifie le serveur et assure l'intégrité des messages pour une connexion TCP/IP (« Transport Telecommunication Protocol / Internet Protocol) :
. notamment, le chiffrement des données (RC4),
. l'authentification du serveur commerçant pour le client (différentes méthodes de chiffrement asymétrique),
. l'intégrité des données (MD2, MD5),
. la non répudiabilité des échanges, et
. optionnellement, l'authentification du client pour le serveur.

Pratiquement, le protocole SSL procure une sécurité de type « poignée de main » pour débuter toute connexion TCP/IP. La poignée de main permet, à l'ordinateur du client et au serveur commerçant, de se mettre d'accord sur le niveau de sécurité à utiliser et de remplir les conditions d'authentification pour la connexion. Ensuite, l'unique rôle du protocole SSL consiste à coder et décoder le flux d'octets du protocole application en cours (par exemple « HTTP », acronyme de « HyperText Transfer Protocol » pour « protocole de transfert hypertexte »). Cela signifie que toutes les informations contenues dans les demandes et réponses HTTP sont entièrement codées, y compris l'URL (acronyme de universal resolution location) que l'ordinateur du client requiert, le contenu de tous les formulaires soumis (tels que les numéros de cartes de crédit), toute information relative à l'autorisation d'accès HTTP (noms d'utilisateur et mot de passe) et toutes les données retournées par le serveur à l'ordinateur du client.

Des certificats SSL peuvent être édités par une entité accréditée à la fois pour le client et le commerçant. De manière usuelle, le client ne possède pas de certificat.

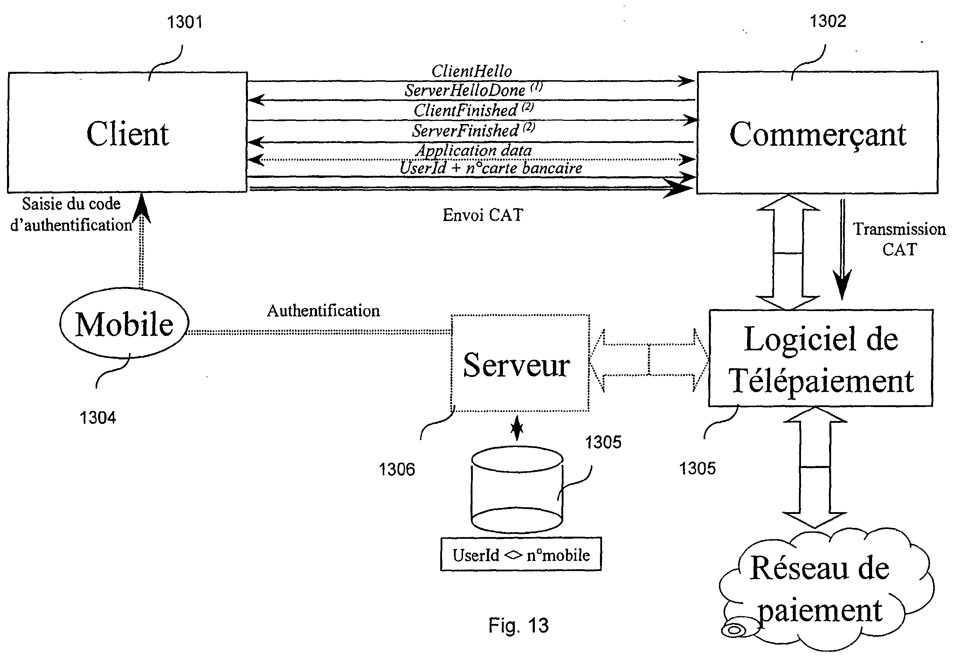

On observe, en **figure 13**, dans un mode particulier de réalisation de la présente invention, en combinaison avec le schéma de paiement SSL, que :
- l'ordinateur du client 1301 initie d'abord l'achat, en choisissant son bien ou service sur le site commerçant 1302 ou la galerie commerçante souhaitée ;
- le déclenchement du paiement est activé par une validation d'achat du client (par exemple, l'appui sur une touche « validation achat »);
- s'ensuit l'ouverture de la communication SSL avec un échange, entre l'ordinateur du client 1301 et le serveur commerçant 1302, de trames qui permettent de régler les paramètres de la communication (version de protocole, numéro de session, algorithme de chiffrement retenu, méthode de compression, authentification réciproque et utilisation ou non de chiffrement à base d'algorithmes à clés publiques ou privées). Une clé maître est échangée, chiffrée, avec la clé privée du commerçant, l'ordinateur du client la déchiffrant avec la clé publique du commerçant et générant ensuite une clé de session basée sur cette clé maître. Cette opération est reproduite sur le serveur commerçant afin de disposer, de part et d'autre, de la même clé de session. Ladite clé de session sert à chiffrer la communication entre l'ordinateur du client et le serveur commerçant ;
- le client tape un identificateur « *Userld»* permettant de l'identifier auprès du serveur commerçant ou de la galerie marchande ;
- le serveur commerçant ou de la galerie transmet l'identificateur « *Userld* » et les paramètres de la transaction, au logiciel de télépaiement 1303 qui calcule le code d'authentification de transaction et l'envoie, par l'intermédiaire d'un message court SMS, au client identifié par son numéro de téléphone mobile 1304 correspondant à son identificateur « *Userld* », dans la base des abonnés 1305 du serveur d'authentification 1306 ;

Une variante consiste à mettre en oeuvre le certificat SSL sur l'ordinateur du client, notamment en y incorporant, lors de sa génération par le serveur d'accréditation, le numéro de mobile utilisateur, le numéro de carte bancaire et la date limite de validité de la carte bancaire. Lors des échanges du début de connexion SSL, le serveur commerçant déchiffre les informations du certificat client et notamment le numéro de mobile qui sert à envoyer le code d'authentification de transaction client. Dans cette variante, il est ainsi possible de s'affranchir de la base de données abonnés dans le serveur d'authentification.

Une autre variante consiste à ce que le client envoie directement le numéro de carte bancaire et la date limite de validité de celle-ci. Dans ce cas, le serveur commerçant calcule un code d'authentification de transaction et récupère le numéro de mobile du client dans la base de données indexée par le numéro de carte bancaire. Ensuite, le code d'authentification de transaction est envoyé au client par l'intermédiaire de son mobile.
- le client identifié par son mobile reçoit le code d'authentification de transaction sur son téléphone mobile, puis le saisit dans un champ d'authentification sur l'écran de son PC ;
- le code d'authentification de transaction est envoyé par l'intermédiaire du serveur commerçant ou de la galerie, puis au serveur d'authentification qui valide alors le code d'authentification de transaction et déclenche le paiement.
- une variante consiste à joindre, en plus du montant de l'achat, les références du produit acheté, les quantités, ... , en clair, avec le code d'authentification de transaction par l'envoi du message court SMS, lors de l'envoi sur le téléphone mobile du client.

Selon une variante (non représentée) de chacun des modes de réalisation de la présente invention, le serveur du commerçant effectue une opération de sélection des transmissions qui sont sécurisées conformément à la présente invention. Au cours de cette opération de sélection de transmissions, en fonction de critères prédéterminés, les transmissions sont classées en deux groupes, l'un concernant les transmission dites « à sécuriser » et l'autres les transmissions dites « normales ». Les transmissions « à sécuriser » sont traitées comme exposé ci-dessus, alors que les transmissions dites « normales » ne donnent pas lieu à plus d'une opération de transmission sur un support de communication. Les transmissions dites normales sont, en fait, conformes aux procédés connus dans l'art antérieur.

Par exemple, dans le cas du mode de réalisation exposé en figure 10, l'opération de sélection peut être faite au cours de l'opération 1005 ou au cours de l'opération 1008, en prenant, comme critère de sélection, le montant de transaction, et en le comparant à un montant limite de transaction. Les transmissions dites « à sécuriser » sont, alors, celles auxquelles sont associées des montants de transaction supérieurs audit montant limite.

Les différents modes de réalisation de la présente invention (authentification, certification de message et paiement électronique en ligne) peuvent être combinés afin de réaliser des applications spécifiques correspondant aux exigences de l'opérateur du service.

L'invention s'applique notamment :
- au contrôle d'accès sur site informatique (pour la sécurité interne à une entreprise, pour le télétravail dans une entreprise, pour l'accès à des bases de données protégées ...),
- à la remise d'information confidentielle en main propre (pour le courrier électronique, la télécopie sécurisée et/ou recommandée, pour la certification de devis ou de bon de commande ...),
- au paiement en ligne (pour le commerce électronique, pour la distribution d'information et ou de logiciels, ...),
- à la certification de message (pour la déclaration à distance, pour la banque à domicile, ...),
- à la remise de propositions commerciales personnalisées (pour les boîtes aux lettres sécurisées, ...),
- à la prise de pari, en ligne (pour les loteries ou les mises pour jeu de casinos, courses, ...),
- à la commande et à la réservation d'un programme de télévision (pour la télévision à facturation des seules émissions vues),
- à l'envoi d'information ou au téléchargement de logiciel à la demande,
- à la réservation de services en ligne ou
- à l'ouverture de porte-monnaie électronique virtuel.

Quelques unes de ces applications sont détaillées ci-dessous, à titre d'exemple.

Pour une application de contrôle d'accès mettant en oeuvre la présente invention, le réseau utilisé peut être un réseau connu sous le nom d'«intranet» ou un réseau mondial connu sous le nom d'«internet». L'objectif de cette application de l'invention est de s'assurer que l'utilisateur est une personne habilitée.

Dans cette application :
- l'utilisateur se met en relation avec le service,
- il s'identifie en fournissant un identifiant,
- il reçoit, par l'intermédiaire d'un deuxième support de communication (par exemple téléphone portable ou pageur), un mot de passe jetable,
- il tape ce mot de passe jetable sur le clavier de son terminal, puis
- si l'authentification est réalisée, il accède à la ressource considérée (pour la sécurité interne dans une entreprise, pour le télétravail ...).

Pour une **application de transmission de courrier électronique ou de télécopie recommandée** mettant en oeuvre la présente invention, le réseau utilisé peut être un réseau commuté. Les objectifs de cette application de l'invention sont :
- de s'assurer que la personne à qui est adressé le message sécurisé (le «destinataire»), le reçoit en main propre et
- de délivrer un certificat de message à l'émetteur et au destinataire du message sécurisé.

Dans cette application :
- l'utilisateur émetteur du message sécurisé compose le numéro d'un service spécialisé pour la mise en oeuvre de cette application,
- il s'identifie en fournissant un identifiant,
- il tape les coordonnées de l'utilisateur destinataire (numéro de téléphone, préférentiellement portable, adresse, télécopie, ...), puis
- il délivre son message sécurisé (oral, écrit et/ou par l'intermédiaire d'un télécopieur).
- il reçoit, par l'intermédiaire d'un deuxième support de communication (par exemple téléphone portable ou pageur), un certificat de message,
- il tape ce certificat de message sur le clavier de son terminal, sur le premier réseau,
- ce certificat de message est vérifié,

Ensuite, l'utilisateur destinataire :
- est informé qu'un message sécurisé l'attend (cette opération est réalisée par tout moyen connu (téléphonie, télécopie, courrier, pageur, courrier électronique ...),
- il compose le numéro du service spécialisé pour la mise en oeuvre de cette application,
- il s'identifie en fournissant un identifiant,
- il reçoit, par l'intermédiaire d'un deuxième support de communication (par exemple téléphone portable ou pageur), un certificat de message, et
- il tape ce certificat de message sur le clavier de son terminal, sur le premier réseau,
- ce certificat de message est vérifié,
- l'utilisateur destinataire du message sécurisé reçoit ce dernier,
- l'utilisateur émetteur est informé que le message sécurisé a été retiré par le destinataire.

Le service spécialisé conserve une trace de chacun des certificats ainsi délivrés.

Pour une **application à la télédéclaration** (c'est-à-dire de déclaration à distance) mettant en oeuvre la présente invention, le premier réseau utilisé peut être un réseau mondial connu sous le nom d'«intemet». L'objectif de cette application de l'invention est de permettre une déclaration administrative officielle immédiate, de délivrer un récépissé à l'utilisateur et de s'assurer de l'identité du déposant.

Dans cette application :
- l'utilisateur émetteur de la déclaration se connecte à un service administratif adapté à cette application (voir ci-dessus),
- il s'identifie en fournissant un identifiant,
- il effectue ladite déclaration ou rempli un formulaire administratif,
- il reçoit, par l'intermédiaire d'un deuxième support de communication (par exemple téléphone portable ou pageur), un certificat de message, et
- il tape ce certificat de message sur le clavier de son terminal.

Pour une **application de l'invention à l'achat et/ou le paiement en ligne** mettant en oeuvre la présente invention, le réseau utilisé est le réseau mondial connu sous le nom d'«internet» et un logiciel mis en oeuvre par l'ordinateur de l'utilisateur permet de crypter un numéro de compte ou de carte bancaire (par exemple avec un logiciel de cryptage «SSL» ou « SET »). L'objectif de cette application de l'invention est de pouvoir payer en ligne en authentifiant la personne qui réalise la transaction.

Dans cette application :
- l'utilisateur se met en relation avec une «galerie marchande», c'est-à-dire un site rassemblant des commerçants fournissant des biens, des services ou de l'information,
- il s'identifie en fournissant un identifiant,
- il choisit une transaction qu'il souhaite effectuer,
- il indique un mode de paiement (carte bancaire, par exemple),
- il envoie au serveur de la galerie marchande son numéro de carte et la date de péremption de cette carte, sous protocole de cryptage SSL,
- le serveur génère un certificat de transaction auquel il associe le montant de transaction, en clair,
- l'utilisateur reçoit, par l'intermédiaire d'un deuxième support de communication (par exemple téléphone portable ou pageur), ce certificat de transaction et le montant de la transaction en clair,
- il vérifie l'intégrité du montant,
- il tape ces éléments sur le clavier de son terminal, et
- la transaction est ensuite effectuée selon des procédures bancaires connues.

Pour une **application mettant en oeuvre la présente invention dans laquelle de l'information (textes, images, graphiques, sons) et/ou des logiciels sont fournis à la demande**, le réseau utilisé est le réseau mondial connu sous le nom d'«intemet». L'objectif de cette application de l'invention est de faire payer à l'acte la personne qui accède à une ressource à valeur ajoutée et, de lui fournir le service demandé (transmission d'information ou de logiciel) en temps réel.

Dans cette application,
- l'utilisateur se met en relation avec le fournisseur de service,
- il s'identifie en fournissant un identifiant,
- il choisit une information ou un logiciel qui l'intéresse,
- le fournisseur de service indique le prix du service considéré,
- l'utilisateur confirme sa volonté d'achat,
- l'utilisateur reçoit, par l'intermédiaire d'un deuxième support de communication (par exemple téléphone portable ou pageur), un certificat de transaction assorti du montant de la transaction en clair, et
- il vérifie l'intégrité du paiement,
- il tape le certificat de transaction sur le clavier de son terminal,
- le certificat de transaction est vérifié,
- il reçoit l'information ou le logiciel considéré, et
- il est facturé par relevé mensuel par son opérateur de service de télécommunication, ou par son fournisseur d'accès au réseau, par exemple, en fonction de sa consommation.

Pour une **application de prise de paris à distance** mettant en oeuvre la présente invention, le réseau utilisé est le réseau mondial connu sous le nom d'«internet». L'objectif de cette application de l'invention est de s'assurer que la personne misant sur un jeu ou prenant un pari à distance est habilitée à le faire et qu'elle a acquitté au préalable les droits nécessaires pour ce jeu.

Dans cette application :
- l'utilisateur ouvre et provisionne son compte chez l'opérateur de service, soit en déposant une somme sur son compte depuis un point de vente quelconque ou par chèque, soit en utilisant la même méthode que dans les applications de l'invention détaillée ci-dessus pour le paiement en ligne,
- puis, lorsque l'utilisateur veut participer à un jeu ou prendre un pari :
   - il s'identifie en fournissant un identifiant, et/ou un numéro d'abonné,
   - il sélectionne le jeu sur lequel il souhaite miser,
- l'utilisateur reçoit, par l'intermédiaire d'un deuxième support de communication (par exemple téléphone portable ou pageur), un certificat de transaction assorti de la mise et du pari, en clair, et
- il vérifie la mise et le pari
- il tape le certificat de transaction sur le clavier de son terminal,
- le certificat de transaction est vérifié (mise, pari, chiffres, combinaison).

Pour une application à la fourniture d'offres personnalisées mettant en oeuvre la présente invention, le réseau utilisé est le réseau mondial connu sous le nom d'«internet». L'objectif de cette application est d'identifier les demandes du consommateur en amont de l'acte d'achat et de lui faire des offres personnalisées correspondant à sa demande.

Dans cette application, lors de sa première connexion :
- le consommateur se met en relation avec le service,
- il s'identifie en fournissant un identifiant et/ou un numéro d'abonné,
- il reçoit, par l'intermédiaire d'un deuxième support de communication (par exemple téléphone portable ou pageur), un mot de passe jetable,
- il tape le mot de passe jetable sur le clavier de son terminal, et
- il remplit un questionnaire marketing permettant de définir les types de propositions commerciales à lui adresser.

Lorsqu'une proposition commerciale correspondant à sa demande lui est adressée, le consommateur reçoit un message «d'alerte», par l'intermédiaire du deuxième support de communication. Au cours de la deuxième connexion :
- le consommateur se met alors en relation avec le service,
- il s'identifie en fournissant un identifiant et/ou un numéro d'abonné,
- il reçoit, par l'intermédiaire d'un deuxième support de communication, un certificat de message,
- il tape le certificat de message sur le clavier de son terminal,
- il accède à la boîte aux lettres personnelle et confidentielle qui contient la proposition commerciale,
- il consulte la proposition.

## Revendications

1. Procédé de transmission d'information sur un premier support de communication (101), caractérisé en ce qu'il comporte :
- une opération d'ouverture d'une session de communication avec un moyen de communication (103, 105, 109) situé à distance, sur ledit premier support de communication,
et, durant ladite session :
- une opération de détermination d'une transaction (600) sur le premier support de communication,
- une opération de réception (605) d'une information représentative de la transaction sur un terminal à adresse unique sur un deuxième support de communication (110), et
- une opération de transmission (608), sur le premier support de communication, d'un message confidentiel représentatif de ladite information représentative de la transaction.

2. Procédé selon la revendication 1, caractérisé en ce que l'information représentative de la transaction comporte une partie en clair représentative de la transaction.

3. Procédé selon l'une quelconque des revendications 1 ou 2, caractérisé en ce que ladite information représentative de la transaction est représentative d'un montant de transaction.

4. Procédé selon l'une quelconque des revendications 1 à 3, caractérisé en ce que l'information représentative de la transaction est représentative d'un produit ou service objet de la transaction.

5. Procédé selon l'une quelconque des revendications 1 à 4, caractérisé en ce que l'information représentative de la transaction est représentative d'une quantité objet de la transaction.

6. Procédé selon l'une quelconque des revendications 1 à 4, caractérisé en ce que l'information représentative de la transaction est représentative d'un invariant.

7. Procédé selon la revendication 6, caractérisé en ce que l'invariant est un identifiant d'un système informatique mis en oeuvre au cours de ladite session.

8. Procédé selon l'une quelconque des revendications 1 à 7, caractérisé en ce que l'information représentative de la transaction est représentative d'un variant de telle manière que pour deux transactions identiques effectuées au cours de deux sessions de communication différentes, les informations représentatives des transaction soient différentes.

9. Procédé selon l'une quelconque des revendications 1 à 8, caractérisé en ce que l'information représentative de la transaction est représentative d'un marqueur temporel.

10. Procédé selon l'une quelconque des revendications 1 à 9, caractérisé en ce que le message confidentiel est identique à au moins une partie de l'information représentative de la transaction.

11. Procédé de transmission d'information selon l'une quelconque des revendications 1 à 10, caractérisé en ce que l'information confidentielle est représentative d'un ou plusieurs numéros de compte bancaire et/ou de carte de paiement.

12. procédé de transmission selon l'une quelconque des revendications 1 à 11, caractérisé en ce qu'il comporte une opération de vérification dudit message confidentiel au cours de laquelle on vérifie la correspondance entre l'information représentative de la transaction et le message confidentiel et, en cas de correspondance, une opération de transmission d'un montant de transaction à un serveur tiers et une opération de réception de la part du serveur tiers d'une autorisation de paiement.

13. Procédé de transmission selon l'une quelconque des revendications 1 à 12, caractérisé en ce qu'il comporte, après l'opération de détermination d'une transaction sur le premier support de communication, une opération de lecture, dans une base de donnée, de l'adresse unique du deuxième terminal sur le deuxième réseau.

14. Procédé de transmission selon l'une quelconque des revendications 1 à 13, caractérisé en ce qu'il comporte une opération de saisie manuelle, au cours de laquelle l'utilisateur saisit un message confidentiel représentatif de l'information confidentielle.

15. Procédé de transmission selon l'une quelconque des revendications 1 à 14, caractérisé en ce qu'il comporte une opération de sélection de transmission, au cours de laquelle, en fonction de critères prédéterminés relatifs à la transaction, on met en oeuvre, ou non :
- une opération de réception d'une information représentative de la transaction sur un terminal à adresse unique sur un deuxième support de communication, et
- une opération de transmission, sur le premier support de communication, d'un message confidentiel représentatif de ladite information représentative de la transaction.

16. Procédé de transmission selon la revendication 15, caractérisé en ce que, au cours de ladite opération de sélection, on met en oeuvre un montant limite de transaction, les transmissions dites « à sécuriser » étant celles auxquelles sont associées les montants de transaction supérieurs audit montant limite.
